# EUROPEAN PATENT SPECIFICATION

(11) **EP 3 077 449 B1**
(45) Date of publication and mention of the grant of the patent: **18.10.2017**
(21) Application number: 14806642.6
(22) Date of filing: 04.12.2014
(51) Int. Cl.: C08J 5/24

(54) **METHOD FOR PREPARING FIBER-REINFORCED PARTS BASED ON CYANATE ESTER/EPOXY BLENDS**
VERFAHREN ZUR HERSTELLUNG FASERVERSTÄRKTER TEILE BASIEREND AUF CYANATESTER/-EPOXIDMISCHUNGEN UND MIT DIESEM VERFAHREN HERSTELLBARE FASERVERSTÄRKTE TEILE
PROCÉDÉ DE PRÉPARATION DE PIÈCES RENFORCÉES PAR DES FIBRES À BASE DE MÉLANGES DE RÉSINE ÉPOXYDE/ESTER DE CYANATE ET PIÈCES RENFORCÉES PAR DES FIBRES OBTENUES PAR LEDIT PROCÉDÉ

(30) Priority: 04.12.2013 EP 13195613
(43) Date of publication of application: 12.10.2016
(73) Proprietor: Lonza Ltd, 3930 Visp (CH)
(72) Inventor: ELLINGER, Stefan, CH-3930 Visp (CH); LA DELFA, Gaetano, CH-3904 Naters (CH); SOMMER, Marcel, 79639 Grenzach-Wyhlen (DE)
(86) International application number: PCT/EP2014/076566
(87) International publication number: WO 2015/082613

(56) References cited:
- EP-A2- 0 291 218
- WO-A1-2006/034830
- WO-A1-2010/082658
- WO-A1-2012/165423
- WO-A1-2013/074259
- US-A1- 2008 032 089
- US-A1- 2011 139 496

## Description

### Field of the Invention

The invention relates to a method for preparing fiber-reinforced parts based on cyanate ester/epoxy blends and to fiber-reinforced parts obtainable by said method.

### Background of the Invention

There are several established methods for the production of fiber-reinforced parts based on thermoset resins. Newer methods, such as resin infusion, resin injection, filament winding, pultrusion and compression molding and further variants hereof can be technically and economically more efficient than the traditional prepregging. See e. g. Flake C. Campbell, Jr., Manufacturing Processes for Advanced Composites, Elsevier Ltd. 2004, ISBN 978-1-85617-415-2. These methods allow the utilization of carbon fiber reinforced plastic (CFRP) molds for the manufacturing of high performance composite materials. For small part production volumes, CFRP molds are much cheaper than steel or invar tooling. Invar tooling is usually required to provide beneficial thermal expansion to manufacture dimensionally stable materials. CFRP molds offer a thermal expansion coefficient similar to that of the parts manufactured using these molds, which eventually leads to better dimensional accuracy (Campbell, pp. 104-110, 336).
Today those materials generally are manufactured with prepreg materials, mainly based on carbon fiber reinforced epoxy resin systems. However, it is getting more and more common to utilize liquid epoxy resins systems for manufacturing CFRP molds by infusion, in some cases to utilize the same resin systems for mold manufacturing and for manufacturing the molded parts. Due to the curing cycles molds are thermally stressed, which results in decreasing interlaminar shear strength (ILSS) values of epoxy-based CFRP molds. It was therefore an object of the invention to provide a method for producing fiber-reinforced parts, such as CFRP molds, that withstand thermal stress for a long period of time without deteriorating their mechanical properties.

US 2011/0139496 A1 discloses resin compositions comprising a cyanate ester resin and a naphthylene ether type epoxy resin and, optionally, a curing accelerator. The cyanate ester resin content is preferably not more than 50% by mass. The resin compositions are used to produce adhesive films from solutions in solvents such as methyl ethyl ketone or solvent naphtha and the curing accelerators used include metal compounds such as zinc naphthenate or cobalt acetylacetonate. US 2011/0139496 A1 further mentions that its resin compositions could also be used to prepare prepregs, but such process would require either a solvent or high temperatures ("hot melt method"). US 2011/0139496 A1 does not disclose the use of toluenediamine derivatives or of 4,4'-methylene-bis-(aniline) derivatives.

WO 2013/074259 A1 discloses polycyanate ester compositions containing silica nanoparticles. The preparation of the compositions involves a step wherein the polycyanate ester and the nanoparticles are dissolved or dispersed in a solvent, and a subsequent distillation in a wiped film evaporator. Even the solutions/dispersions before the distillation have a high viscosity of between about 10 Paxs (10,000 mPa×s) and about 250 Paxs at 72 °C. WO 2013/074259 A1 does not disclose the use of toluenediamine derivatives or of 4,4'-methylene-bis-(aniline) derivatives.

WO 2006/034830 A1 discloses a two-step process for the solvent-free preparation of a fiber-reinforced resin-coated sheet. In the first step a powdered resin, such as a (solid) cyanate ester or epoxy resin is applied to a substrate selected from a woven or nonwoven fabric using magnetic and electrostatic forces, and in the second the thus obtained layer of coating powder is molted and cured. The coating powder is in powder form. The process requires a system of magnetic and/or electrically charged rolls and it appears to be applicable to flat and preferably continuous substrates only.

### Summary of the Invention

The invention provides a method for producing time-efficiently - meaning fast curing - fiber-reinforced parts based on cyanate esters or cyanate ester/epoxy blends using methods like resin transfer molding, vacuum assisted resin transfer molding, liquid resin infusion, Seemann Composites Resin Infusion Molding Process, vacuum assisted resin infusion, injection molding, compression molding, spray molding, laminating, filament winding, and pultrusion with a potentially high temperature resistance. With the formulations and the process parameters according to the invention it is possible to manufacture high-performing fiber reinforced composite parts as far as temperature resistance, mechanical properties and other characteristics are concerned.

### Detailed Description of the Invention

According to the invention, a fiber-reinforced part based on cyanate ester or a cyanate ester/epoxy blend is prepared by a method comprising the steps of
(i) providing a liquid mixture comprising
   (a) from 15 to 99.9 wt.% of at least one di- or polyfunctional cyanate ester selected from the group consisting of difunctional cyanate esters of formula 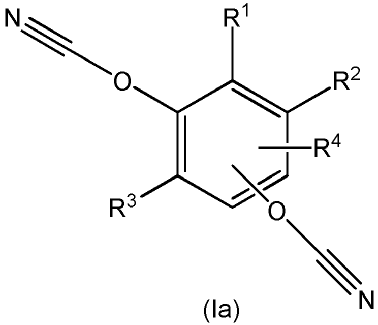 wherein R¹ through R⁴ are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy, difunctional cyanate esters of formula 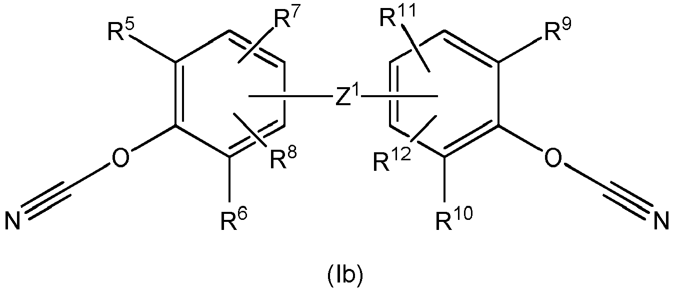 wherein R⁵ through R¹² are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy; and Z¹ indicates a direct bond or a divalent moiety selected from the group consisting of -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linear C₁₋₁₀ alkanediyl, branched C₄₋₁₀ alkanediyl, C₃₋₈ cycloalkanediyl, 1,2-phenylene, 1,3-phenylene, 1,4-phenylene, -N(R¹³)- wherein R¹³ is selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, phenyl and phenoxy, and moieties of formulas 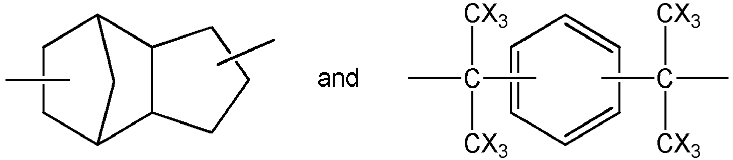 wherein X is hydrogen or fluorine; and polyfunctional cyanate esters of formula 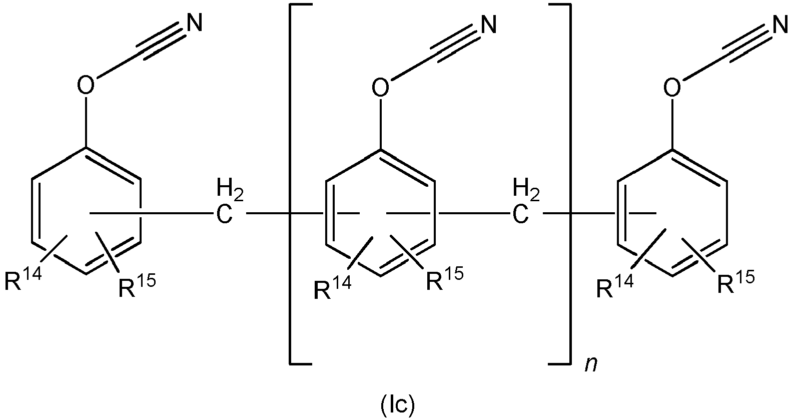 and oligomeric mixtures thereof, wherein *n* is an integer from 1 to 20 and R¹⁴ and R¹⁵ are independently selected from the group consisting of hydrogen, linear C₁₋₁₀ alkyl and branched C₄₋₁₀ alkyl;
   (b) from 0 to 84.9 wt.% of at least one di- or polyfunctional epoxy resin selected from the group consisting of epoxy resins of formula 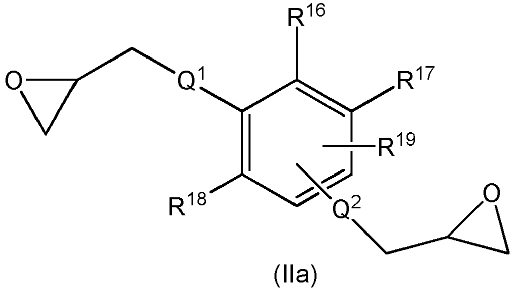 wherein Q¹ and Q² are independently oxygen or - N(G)- with G = oxiranylmethyl, and R¹⁶ through R¹⁹ are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy; epoxy resins of formula 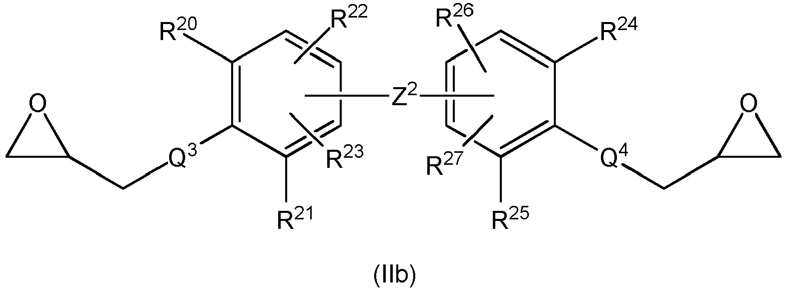 wherein Q³ and Q⁴ are independently oxygen or -N(G)- with G = oxiranylmethyl, R²⁰ through R²⁷ are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy, and Z² indicates a direct bond or a divalent moiety selected from the group consisting of -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linear C₁₋₁₀ alkanediyl, branched C₄₋₁₀ alkanediyl, C₃₋₈ cycloalkanediyl, 1,2-phenylene, 1,3-phenylene, 1,4-phenylene, glycidyloxyphenylmethylene and -N(R²⁸)- wherein R²⁸ is selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, phenyl and phenoxy;
      epoxy resins of formula 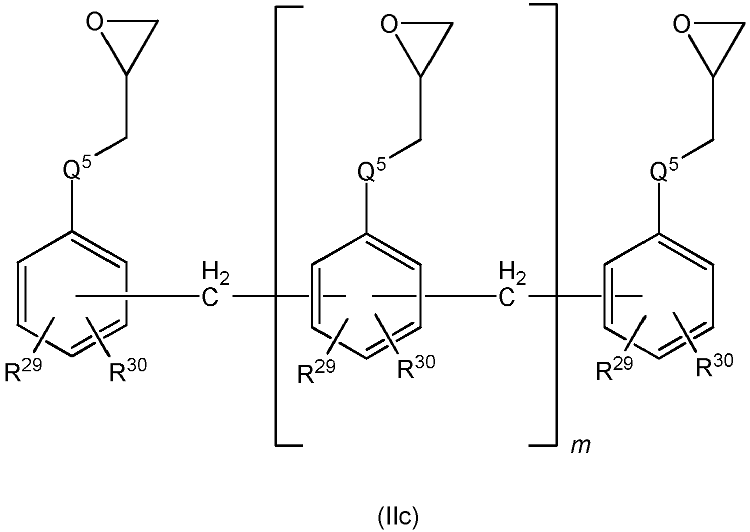 and oligomeric mixtures thereof, wherein m is an integer from 1 to 20, Q⁵ is oxygen or -N(G)- with G = oxiranylmethyl, and R²⁹ and R³⁰ are independently selected from the group consisting of hydrogen, linear C₁₋₁₀ alkyl and branched C₄₋₁₀ alkyl; and naphthalenediol diglycidyl ethers;
      and
   (c) from 0.1 to 25 wt.% of a metal-free catalyst;
(ii) providing a fiber structure
(iii) placing said fiber structure in a mold or on a substrate,
(iv) impregnating said fiber structure with said liquid mixture, optionally by applying elevated pressure and/or evacuating the air from the mold and fiber structure, at a temperature of 20 to 80 °C, and
(v) curing said liquid mixture by applying a temperature of 30 to 150 °C for a time sufficient to cure said mixture.

The expression "liquid mixture" means a mixture that is liquid at ambient temperature (typically about 25 °C) and has a viscosity of preferably less than 10,000 mPa×s at ambient temperature and preferably less than 1,000 mPa×s, more preferably less than 500 mPa×s, and most preferably no more than about 300 mPa×s at a temperature of 80 °C or less.

Here and hereinbelow, the expression "linear C₁₋₁₀ alkyl" includes all alkyl groups having 1 to 10 carbon atoms in an unbranched chain, irrespective of their point of attachment. Examples of C₁₋₁₀ alkyl groups are methyl, ethyl, 1-propyl, 2-propyl (isopropyl), 1-butyl (*n*-butyl), 2-butyl (*sec*-butyl), 1-pentyl, 2-pentyl, 3-pentyl, 1-hexyl, 2-hexyl, 3-hexyl and so on. Especially preferred linear C₁₋₁₀ alkyl groups are methyl, ethyl, 1-propyl, 2-propyl (isopropyl) and 1-butyl (*n*-butyl). Similarly, the expression "branched C₄₋₁₀ alkyl" includes all alkyl groups having 4 to 10 carbon atoms and at least one branching point. Examples of branched C₄₋₁₀ alkyl groups are 2-methyl-1-propyl (isobutyl), 2-methyl-2-propyl (*tert*-butyl), 3-methyl-1-butyl (isopentyl), 1,1-dimethyl-1-propyl (*tert*-pentyl), 2,2-dimethyl-1-propyl (neopentyl) and so on. Especially preferred branched C₄₋₁₀ alkyl groups are 2-methyl-1-propyl (isobutyl) and 2-methyl-2-propyl (*tert-*butyl). The expression "C₁₋₄ alkyl" includes methyl, ethyl, 1-propyl, 2-propyl (isopropyl), 1-butyl, 2-butyl (*sec*-butyl), 2-methylpropyl (isobutyl), and 2-methyl-2-propyl (*tert*-butyl) while the expressions "C₁₋₄ alkoxy" and "C₁₋₄ alkylthio" include the before mentioned C₁₋₄ alkyl groups bound via an oxygen or divalent sulfur atom. Particularly preferred "C₁₋₄ alkoxy" and "C₁₋₄ alkylthio" goups are methoxy and methylthio. The expression "C₃₋₈ cycloalkyl" includes saturated carbocyclic rings having 3 to 8 carbon atoms, in particular cyclopropyl, cyclobutyl, cyclopentyl, cycloheptyl and cyclooctyl. Especially preferred C₃₋₈ cycloalkyls are cyclopentyl, cyclohexyl and cycloheptyl.

The expressions "halogenated C₁₋₁₀ alkyl", "halogenated branched C₄₋₁₀ alkyl" and "halogenated C₃₋₈ cycloalkyl" include any of the beforementioned groups bearing one or more halogen atoms selected from fluorine, chlorine, bromine and iodine at any position of the carbon chain or ring. Two or more halogen atoms may be equal or different.

The expression "C₁₋₁₀ alkoxy" includes any of the beforementioned linear C₁₋₁₀ alkyl or branched C₄₋₁₀ alkyl groups bound via an oxygen atom in an ether linkage, such as methoxy, ethoxy, 1-propoxy, 2-propoxy (isopropoxy), 1-butoxy and so on.

As mentioned above, the expression "halogen" includes fluorine, chlorine, bromine and iodine.

The expressions "linear C₁₋₁₀ alkanediyl", "branched C₄₋₁₀ alkanediyl" and "C₃₋₈ cycloalkanediyl" include unbranched C₁₋₁₀ alkane chains, branched C₄₋₁₀ alkane chains and saturated carbocyclic rings having 3 to 8 carbon atoms, respectively, according to the above definitions of "linear C₁₋₁₀ alkyl", "branched C₄₋₁₀ alkyl" and "C₃₋₈ cycloalkyl", having two open valencies at the same or different carbon atom(s). Examples of linear C₁₋₁₀ alkanediyl groups are methanediyl (methylene), 1,1-ethanediyl (ethylidene), 1,2-ethanediyl (ethylene), 1,3-propanediyl, 1,1-propanediyl (propylidene), 2,2-propanediyl (isopropylidene), 1,4-butanediyl, 1,5-pentanediyl, 1,6-hexanediyl and so on. Examples of branched C₄₋₁₀ alkanediyl groups are 2-methyl-1,1-propanediyl (iso-butylidene), 2-methyl-1,3-propanediyl and 2,2-dimethyl-1,3-propanediyl. Examples of C₃₋₈ cycloalkanediyl groups are 1,1-cyclopropanediyl, 1,2-cyclopropanediyl, 1,1-cyclobutanediyl, 1,2-cyclobutanediyl, 1,3-cyclobutanediyl, 1,1-cyclopentanediyl, 1,2-cyclopentanediyl, 1,3-cyclopentanediyl, 1,1-cyclohexanediyl, 1,2-cyclohexanediyl, 1,3-cyclohexanediyl and 1,4-cyclohexanediyl. Cycloalkanediyl groups having the open valencies on different carbon atoms may occur in *cis* and *trans* isomeric forms.

Naphthalenediol diglycidyl ethers include the diglycidyl ethers of any naphthalenediol, such as 1,2-naphthalenediol, 1,3-naphthalenediol, 1,4-naphthalenediol, 1,5-naphthalenediol, 1,6-naphthalenediol, 1,7-naphthalenediol, 1,8-naphthalenediol, 2,3-naphthalenediol, 2,6-naphthalenediol and 2,7-naphthalenediol. Preferred are the diglycidyl ethers of the symmetric naphthalenediols, i.e., the 1,4-, 1,5-, 1,8-, 2,3-, 2,6- and 2,7-naphthalenediols. Especially preferred is the 2,6-naphthalenediol diglycidyl ether.

The polyfunctional cyanate esters (Ic) and polyfunctional epoxy resins (IIc) may be oligomeric mixtures of molecules having different values of *n.* Such oligomeric mixtures are usually characterized by an average value of n which may be a non-integer number. In a preferred embodiment, the impregnation in step (iii) is achieved using a method selected from the group consisting of resin transfer molding, vacuum assisted resin transfer molding, liquid resin infusion, Seemann Composites Resin Infusion Molding Process, vacuum assisted resin infusion, injection molding, compression molding, spray molding, pultrusion, laminating, filament winding, Quickstep process or Roctool process. More preferably, the impregnation in step (iii) is achieved using a liquid composite molding process method selected from the group consisting of resin transfer molding, liquid resin infusion, Seemann Composites Resin Infusion Molding Process, vacuum assisted resin infusion, injection molding, and EADS vacuum assisted process (VAP^{®}).

### - Pultrusion

For this method the state-of-the-art material are epoxy resins and polyesters. So far cyanate esters have not been applied to this method. The pultrusion process can be used to continuously manufacture bars and profiles with a regular cross-section or hollow structure. The fiber reinforcement is continuous and the fibers are aligned parallel to the production direction.

The reinforcement structures (made of glass or carbon or aramid fibers) are impregnated from a resin bath with all components mixed. The resin formulation should have a viscosity of less than 500 mPa×s and preferably no more than 300 mPa×s, at the impregnation temperature.

Complete and uniform impregnation of the reinforcing fibers is of crucial importance in the pultrusion process.

Subsequently, the composite material is fed into a heated die and drawn through it. As a result the matrix starts to polymerize in order to produce a fiber reinforced bar with a cross-section defined by the dimensions of the pultrusion die. Finally, the bar is cut to the required length.

By using aromatic diamines (especially Lonzacure™ DETDA80) as catalysts in the pultrusion process the mix viscosity can be further reduced, which helps to operate the resin bath at a lower temperature. In order to achieve a certain and economically production speed the concentration of the aromatic diamine needs to be higher. The higher concentration guarantees that the pultruded bar is already polymerized and solid on exiting the mold.

Gelation time and cure time can be designed very precisely and the curing time overall can be reduced considering the reactivity data given in the working examples below.

### - Filament Winding

For this method the state-of-the-art material are epoxy resins and polyesters. So far cyanate esters have only been applied rarely and without catalysts to this method. For the production of pressure vessels and convex geometries from composite materials, filament winding is one of the most competitive technologies. The industrially available impregnation method for the filament winding comprises the impregnation of the fibers in an open bath. During the impregnation process the roving has to be spread out in order to completely wet the single fiber filaments of the roving.
A filament winding apparatus then winds the tensioned and resin-impregnated fiber bundle around a mandrel which defines the shape and dimensions of the final product. The fiber bundles are applied under tension in order to achieve a high fiber/resin volume ratio on the composite.

For filament winding the resin formulation should have a viscosity of less than about 500 mPa×s, preferably no more than about 300 mPa×s, at the impregnation temperature. The reinforcement structures (made e. g. of glass, carbon, or aramid fibers) are impregnated in a resin bath with all components mixed. Complete and uniform impregnation of the reinforcing fibers is of crucial importance in the filament winding process.
By using aromatic diamines (especially Lonzacure™ DETDA80) as catalysts the mix viscosity can be further reduced, which helps to operate the resin bath at a lower temperature. In order to achieve a certain and economically curing process a certain concentration of the aromatic diamine is applied. The concentration guarantees that the produced (e. g. cylindrical or elliptical) part can be cured at much lower temperature than a pure cyanate ester resin (without catalyst) which results in lower internal stress and higher part quality.
Gelation time and cure time can be designed very precisely and the curing time overall can be reduced considering the reactivity data given in the working examples below.

The catalysts employed in the present invention are metal-free, and in particular free of transition metals which may impair the properties (e. g. the electromagnetic properties) of the final products or cause environmental or occupational problems. Preferably the liquid mixture of the present invention is essentially free of soluble metal compounds. "Essentially free" is to be understood to mean a metal content of no more than 10 ppm, preferably no more than 5 ppm by weight.

The catalyst (c) is selected from the group consisting of aromatic diamines of formula 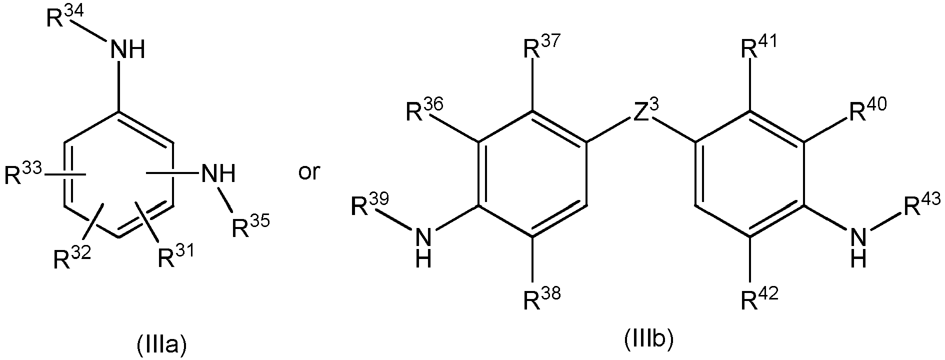 wherein R³¹, R³², R³³, R³⁶, R³⁶, R³⁷, R³⁸, R⁴⁰, R⁴¹ and R⁴² are independently selected from hydrogen, C₁₋₄ alkyl, C₁₋₄ alkoxy, C₁₋₄ alkylthio and chlorine and R³⁴, R³⁵, R³⁹ and R⁴³ are independently selected from hydrogen and C₁₋₈ alkyl, and mixtures thereof and Z³ indicates a direct bond or a divalent moiety selected from the group consisting of -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linear C₁₋₁₀ alkanediyl, branched C₄₋₁₀ alkanediyl, C₃₋₈ cycloalkanediyl, 1,2-phenylene, 1,3-phenylene, 1,4-phenylene, -N(R⁴⁴)- wherein R⁴⁴ is selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, phenyl and phenoxy.
In a preferred embodiment Z³ is a methylene (-CH₂-) group.
The expression "C₁₋₄ alkyl" is herein meant to include methyl, ethyl, 1-propyl, 2-propyl (isopropyl), 1-butyl, 2-butyl (*sec*-butyl), 2-methyl-1-propyl (isobutyl) and 2-methyl-2-propyl (*tert*-butyl) while the expression "C₁₋₈ alkyl" is meant to include the beforementioned and all linear and branched alkyl groups having 5 to 8 carbon atoms according to the definitions given above for linear C₁₋₁₀ alkyl and branched C₄₋₁₀ alkyl.

In an especially preferred embodiment the catalyst (c) is selected from the group consisting of 3,5-diethyltoluene-2,4-diamine, 3,5-diethyltoluene-2,6-diamine, 4,4'-methylenebis(2,6-diisopropylaniline), 4,4'-methylenebis(2-isopropyl-6-methylaniline), 4,4'-methylenebis(2,6-diethylaniline), 4,4'-methylenebis(3-chloro-2,6-diethylaniline), 4,4'-methylenebis(2-ethyl-6-methylaniline), 4,4'-methylenebis(*N*-*sec*-butyl-aniline), and mixtures thereof.

In another preferred embodiment the at least one di- or polyfunctional cyanate ester (a) is a cyanate ester of formula (Ic) wherein R¹⁴ and R¹⁵ are hydrogen and the average value of *n* is from 1 to 20, more preferably from 1 to 15, even more preferably from 1 to 10, and most preferably from 1 to 5.

In still another preferred embodiment the at least one di- or polyfunctional epoxy resin (b) is selected from the group consisting of bisphenol A diglycidyl ether resins, bisphenol F diglycidyl ether resins, *N*,*N*,*O*-triglycidyl-3-aminophenol, *N,N,O*-triglycidyl-4-aminophenol, *N*,*N*,*N*',*N*'-tetraglycidyl-4,4'-methylenebisbenzenamine, 4,4',4"-methylidenetrisphenol triglycidyl ether resins, naphthalenediol diglycidyl ethers, and mixtures thereof.

In another preferred embodiment the liquid mixture obtained in step (i) comprises from 20 to 80 wt.% of the at least one di- or polyfunctional cyanate ester (a).

In another preferred embodiment the liquid mixture obtained in step (i) comprises from 20 to 79 wt.% of the at least one di- or polyfunctional epoxy resin (b).

In still another preferred embodiment the liquid mixture obtained in step (i) comprises from 0.5 to 10 wt.% of the catalyst (c).

In another preferred embodiment the fiber structure provided in step (ii) is selected from the group consisting of carbon fibers, glass fibers, quartz fibers, boron fibers, ceramic fibers, aramid fibers, polyester fibers, polyethylene fibers, natural fibers, and mixtures thereof.

In another preferred embodiment the fiber structure provided in step (ii) is selected from the group consisting of strands, yarns, rovings, unidirectional fabrics, 0/90° fabrics, woven fabrics, hybrid fabrics, multiaxial fabrics, chopped strand mats, tissues, braids, and combinations thereof.

The liquid mixture obtained in step (i) may contain one or more additional components selected from the group consisting of (internal) mold release agents, fillers, reactive diluents, and mixtures or combinations thereof.

Internal mold release agents are preferably present in amounts of 0 to 5 wt.%, based on the total amount of components (a), (b), and (c). Examples of suitable internal mold release agents to be added to the liquid mixture obtained in step (i) are Axel XP-I-PHPUL-1 (a proprietary synergistic blend of organic fatty acids, esters and amine neutralizing agent) and Axel MoldWiz^{®} INT-1850HT (a proprietary synergistic blend of organic fatty acids, esters and alkanes and alkanols, supplier: Axel Plastics Research Laboratories, Inc., Woodside NY, USA). Other mold release agents are usually rubbed on a mold surface. Examples of those mold release agents are Frekote^{®} 700-NC (a mixture of hydrotreated heavy naphtha (60-100%), dibutyl ether (10-30%), naphtha (petroleum) light alkylate (1-5%), octane (1-5%) and proprietary resin (1-5%); supplier: Henkel AG & Co. KGaA, Düsseldorf, Germany) and Airtech Release All^{®} 45 (which contains 90-100% hydrotreated heavy naphtha (petroleum); supplier: Airtech Europe SARL, Differdange, Luxembourg).

Fillers are preferably present in amounts of 0 to 40 wt.%, based on the total amount of components (a), (b), and (c). They may be in particle, powder, sphere, chip and/or strand form in sized from nano scale to millimeters. Suitable fillers may be organic, such as thermoplastics and elastomers, or inorganic, such as glass, graphite, carbon fibers, silica, mineral powders, and the like.

Reactive diluents are preferably present in amounts of 0 to 20 wt.%, based on the amount of component (b). Examples of suitable reactive diluents are liquid mono-, di- or trifunctional epoxy compounds derived from aliphatic or cycloaliphatic alcohols or phenols, such as diglycidyl ethers of glycols, in particular 1,ω-alkanediols having 4 to 12 carbon atoms, for example 1,4-(diglycidyloxy)butane or 1,12-(diglycidyloxy)dodecane, or the diglycidyl ether of neopentyl glycol, glycidyl ethers of linear or branched primary alcohols having 8 to 16 carbon atoms, for example 2-ethylhexyl glycidyl ether or C₈₋₁₆ alkyl glycidyl ether, or the diglycidyl ether of 1,4-cyclohexanedimethanol.

In a preferred embodiment the liquid mixture obtained in step (i) contains little or no additional (non-reactive) solvent such as acetone or butanone. Preferably it contains less than 20wt%, more preferably less than 15 wt.%, even more preferably less than 10 wt.% or 5 wt.%, each percentage being based on the total weight of components (a), (b), and (c), or, most preferably, no solvent at all.

The curing step (v) may be performed using any heating technique, including conventional techniques as well as innovative techniques such as Quickstep or Roctool processes. The time required for curing the liquid mixture depends on its composition and the curing temperature, it is typically in the range of about one hour to about 20 hours. A skilled person can easily determine suitable curing conditions based on the guidance given by the working examples below.

The curing step (v) may further be followed by a post-curing heat treatment, preferably at a temperature up to 300 °C for up to 10 hours.

The fiber-reinforced parts obtainable by the method of the invention exhibit a high-temperature resistance, as given by the *T*_{g} value (determined by tan δ measurement via TMA) of preferably more than 100 °C, more preferably 120 to 160 °C, after demolding and preferably more than 180 °C, more preferably 200 to 420 °C, after post-curing.

The fiber-reinforced parts obtainable by the method of the invention and its preferred embodiments as described above are likewise an object of the invention.

The fiber-reinforced parts obtainable by the method of the invention may be used in visible or non-visible application, including, but not limited to, fiber reinforced panels, such as protective covers, door and flooring panels, doors, stiffeners, spoilers, diffusors, boxes, etc., complex geometries, such as molded parts with ribs, parts with rotational symmetry parts such as pipes, cylinders, and tanks, in particular fuel tanks, oil and gas riser, exhaust pipes, etc., and massive or hollow profiles, such as stiffeners, spring leaves, carriers, etc., and sandwich-structured parts with or without core structure, such as blades, wings, etc., or carbon fiber-reinforced plastic molds for the manufacture of high performance composite materials.

The following non-limiting examples will illustrate the method of the invention and the preparation of the fiber-reinforced parts according to the invention. All percentages are by weight, unless specified otherwise.

### Examples:

### Methods:

### RTM resin transfer molding/resin injection

The process Resin Transfer Molding is described: The fiber reinforcement is placed in a mold set; the mold is closed and clamped. The resin is injected into the mold cavity under pressure. The motive force in RTM is pressure. Therefore, the pressure in the mold cavity will be higher than atmospheric pressure. In contrast, vacuum infusion methods use vacuum as the motive force, and the pressure in the mold cavity is lower than atmospheric pressure.

The resin injection molding process is designed for high output (short cycle time) part manufacturing under repetitive conditions, with very limited tolerances (concerning all process parameters, e.g. such as viscosity, mix ratio, permeability of the reinforcement, geltime, cycle time). It is most commonly used to process both thermoplastic and thermosetting polymers.

Desired characteristic of the resin used in RTM:
- Must have a low viscosity at a certain temperature as it is held in the reservoir prior to injection
- Must impregnate the fiber preform quickly and uniformly without voids
- Must gel as quickly as possible once impregnation occurs (fast cycle time)
- Must possess sufficient hardness to be demolded without distortion
- Low viscosity critical (<1000 mPa×s at impregnation temperature to impregnate preform loading of 50%)
- Low viscosity requires less pressure to achieve adequate fiber wetting
- Injection temperature (typically elevated) of resin should be held as close as possible to minimum viscosity to ensure preform impregnation, since higher temperatures accelerate curing, thus cutting injection time.

The resin formulations developed (cyanate ester formulations and blends catalyzed with amines) can be also applied in composite manufacturing processes with dynamically changing mold temperatures, e.g. such as the Quickstep or Roctool processes.

### Technical characteristic:

Cyanate ester or cyanate ester/epoxy blends resin systems could be cured with the amines catalyst Lonzacure DETDA80 or other amines in RTM resin injection processes. The cure time could be designed varying the catalyst amount (for example from 0.5 to 5 wt.% or more) which depend mostly by the injection temperature and mold temperature applied for the process. Finally the cure cycle time could be reduced to values in the order of 5-30 minutes, preferably 5-20 minutes. Post-cure treatment between 180 °C and 300 °C, preferably between 180 °C and 220 °C, was applied in order to achieve the desired high thermal and mechanical performance.

### Example 1:

The formulation was a mix of cyanate ester Primaset™ PT-30 (formula Ic, R¹⁴ = R¹⁵ = H, *n* = 3-4) and bisphenol A epoxy resin (formula IIb, Q³ = Q⁴ = O, R²⁰ = R²¹ = R²² = R²³ = R²⁴ = R²⁵ = R²⁶ = R²⁷ = H, Z² = -C(CH₃)₂-, glycidyloxy moieties in *para* position to Z²). The liquid amine Lonzacure™ DETDA80 (formula IIIa, R³¹ = CH₃, R³² = R³³ = C₂H₅, R³⁴ = R³⁵ = H, isomeric mixture of about 80% 3,5-diethyltoluene-2,4-diamine and about 20% 3,5-diethyltoluene-2,6-diamine) was used as catalyst.
A mixture of 12.80 g (41 wt.%) of Primaset™ PT-30 and 18.10 g (59 wt.%) of bisphenol A diglycidyl ether epoxy resin GY240 (Huntsman) was prepared. The viscosity of the resin system is shown in Table 1 below:

**Table 1: Viscosity of Primaset ™ PT-30 (41 wt.%)/Bisphenol A (59 wt.%)**

| **Temperature [°C]** | **Viscosity [mPa×s]** |
|---|---|
| 40 | 3250 |
| 50 | 1000 |
| 60 | 400 |
| 80 | 100 |
| 100 | 37 |
| 120 | 18 |

The viscosity of the liquid catalyst amine Lonzacure™ DETDA80 is very low as shown in Table 2 below.

**Table 2: Viscosity of Lonzacure™ DETDA80**

| **Temperature [°C]** | **Viscosity [mPa×s]** |
|---|---|
| 25 | 176 |
| 30 | 108 |
| 40 | 46 |
| 50 | 24 |
| 60 | 14 |

The low viscosity and high fiber wetting potential of the resin system Primaset™ PT-30/- bisphenol A epoxy + catalyst Lonzacure™ DETDA80 can provide good processability parameters. The resin can be injected at temperatures between 50 and 80 °C with viscosities below 1000 mPa×s.

The resin system must gel as quickly as possible once the impregnation is completed. The gelation time can be controlled by varying the amount of catalyst and the temperature as shown in Table 3 below. The amount of catalyst is given in percent by weight, based on the amount of cyanate ester + epoxy resin.

**Table 3: Gel Time (Gelnorm) of Primaset™ PT-30/Bisphenol A Epoxy Resin + Catalyst Lonzacure™ DETDA80**

| **Catalyst Lonzacure™ DETDA80 (%)** | **Gel Time (Gelnorm) [min]** | | | | |
|---|---|---|---|---|---|
| | 60 °C | 80 °C | 100 °C | 120 °C | 140 °C |
| 1 | 1030 | 365 | 127 | 48 | 23 |
| 2 | 182 | 55 | 24.5 | 10 | 6.5 |
| 3 | 86 | 26 | 10 | 6 | n. d. |
| 5 | 39 | 14 | 6 | n. d. | n. d. |

| | | | | | |
|---|---|---|---|---|---|
| n. d.: not determined (too short) | | | | | |

By setting a mold temperature of, for example, 130-140 °C, the resin system containing from 2 to 3 wt.% amine Lonzacure™ DETDA80 catalyst achieved sufficient hardness within 5-20 min to allow demolding without distortion. Glass or carbon fiber composite parts could be produced by this method. A summary of the technical parameters is shown in Table 4 below.

**Table 4: Summary of Technical Parameters for RTM-Resin Injection:**

| **Parameters** | **Values** |
|---|---|
| Resin 1 (Primaset™ PT-30) | 12.80 g (41 wt.%) |
| Resin 2 (Bisphenol A Epoxy GY240) | 18.10 g (59 wt.%) |
| Catalyst (Amine Lonzacure™ DETDA80) | 2-3 wt.% |
| Fiber type | Glass or carbon fibers |
| Injection temperature | 50-80 °C |
| Viscosity at infusion temperature (80 °C) | <500 mPa×s |
| Mold temperature | 130-140 °C |
| Mold cure cycle | 5-20 min @ 130-140 °C |

After the cure cycle it was possible to demold the parts without distortion.
High temperature resistance (respectively a high *T*_{g}) can be achieved either through a defined post-cure process step in an oven (temperature between 180 °C and 220 °C) or during service in a high temperature environment.

The *T*_{g} glass transition temperature was measured by Thermal Mechanical Analysis (TMA). The machine used was a Mettler Toledo instrument TMA SDTA840. The sample dimensions were 6x6 mm² (length × width) and 1.5 mm thickness. The test method applied two heating ramps (first ramp: 25-220 °C @ 10 K/min and a second ramp 25-350 °C @ 10 K/min). The *T*_{g} was evaluated on the second ramp. The results are shown in Table 5 below.

**Table 5: Thermal Performance (Example 1)**

| | |
|---|---|
| Cure cycle | 10 min @ 120 °C + Demold |
| Post cure cycle | 25-220 °C @ 1 K/min + 2 h @ 220 °C |
| Tq onset by TMA | 225-235 °C |

### Example 2:

The formulation was a mix of cyanate ester Primaset™ PT-15 (formula Ic, R¹⁴ = R¹⁵ = H, *n* = 2-3) and bisphenol A diglycidyl ether epoxy resin. The liquid amine Lonzacure™ DETDA80 was used as catalyst.

A mixture of 12.80 g (41 wt.%) of Primaset™ PT-15 and 18.10 g (59 wt.%) of bisphenol A epoxy resin GY240 (Huntsman) was prepared. The viscosity of the resin system is shown in Table 6 below:

**Table 6 Viscosity of Primaset™ PT-15 / Bisphenol A Epoxy Resin**

| **Temperature [°C]** | **Viscosity [mPa×s]** |
|---|---|
| 30 | 2100 |
| 40 | 650 |
| 50 | 250 |
| 60 | 120 |
| 80 | 40 |
| 100 | 17 |
| 120 | 10 |

The low viscosity and high fiber wetting potential of the resin system Primaset™ PT-15/bisphenol A epoxy resin + catalyst amine Lonzacure™ DETDA80 provide even better processability parameters than the resin system described above in Example 1. The resin can be injected at temperatures between 35 and 60 °C with viscosity lower than 1000 mPa×s.

The resin system must gel as quickly as possible once the impregnation is completed. The gelation time can be controlled by varying the amount of catalyst and the temperature as can be shown in Table 7 below:

**Table 7: Gel Time (Gelnorm) of Primaset™ PT-15 (41 wt.%)/Bisphenol A Epoxy (59 wt.%) resin + catalyst Lonzacure™ DETDA80**

| **Catalyst Lonzacure™ DETDA80 (%)** | **Geltime (Gelnorm) [min]** | | | | |
|---|---|---|---|---|---|
| | 60 °C | 80 °C | 100 °C | 120 °C | 140 °C |
| 1 | 2056 | 612 | 233 | 97 | 42 |
| 2 | 403 | 151 | 54 | 23 | 10 |
| 3 | 183 | 61 | 23 | 9 | 5.5 |
| 5 | 81 | 22 | 8.5 | 5 | 3 |

By, for example, setting the mold temperature to 120 °C, the resin system containing from 3 to 5 wt.% amine Lonzacure™ DETDA80 catalyst achieves sufficient hardness to allow demolding after about 10 min without distortion. Glass or carbon fiber composite parts could be produced by this method. A summary of the technical parameters is shown in Table 8 below.

**Table 8: Summary of the technical parameters RTM-resin injection:**

| **Parameters** | **Values** |
|---|---|
| Resin 1: Primaset™ PT-15 | 12.80 g |
| Resin 2: Bisphenol A epoxy GY240 | 18.10 g |
| Catalyst: Amine Lonzacure™ DETDA80 | 3-5 wt.% |
| Fiber type | Glass or carbon fibers |
| Injection temperature | 35-60 °C |
| Viscosity at infusion temperature (80 °C) | <500 mPa×s |
| Mold Temperature | 120-140 °C |
| Mold Cure cycle | 5-15 min @ 120-140 °C |

After the cure cycle it was possible to demold the parts without distortion.
High temperature resistance (respectively a high *T*_{g}) can be achieved either through a defined post-cure process step in an oven (temperature between 180 °C and 220 °C) or during service in a high temperature environment.

The *T*_{g} glass transition temperature was measured by Thermal Mechanical Analysis (TMA) as described in Example 1. The results are shown in Table 9 below:

**Table 9: Thermal Performance (Example 2)**

| | |
|---|---|
| Cure cycle | 10 min @ 120 °C + Demold |
| Post cure cycle | 25-220 °C @ 1 K/min + 2 h @ 220 °C |
| Tq onset by TMA | 205-215 °C |

### - Vacuum assisted resin transfer molding (VARTM) and resin infusion

Former inventions were mostly addressing the prepreg technology or 1-component resin formulations. Resin infusion requires resin systems with a viscosity (at infusion temperature) of less than 500 mPa×s, preferably less than 300 mPa×s. The reinforcement structures (made of glass or carbon or aramid fibers) are impregnated from a resin pot with all components mixed. By using aromatic diamines (especially Lonzacure™ DETDA80) the mix viscosity can be further reduced, which helps to operate the resin pot at a lower temperature. Considering the size of the part, the infusion time must be evaluated. Gelation time and cure time can be designed very precisely and the curing time overall can be reduced considering the reactivity date in Table 10 below.

**Table 10: Gel Time (Gelnorm) of Primaset™ PT-30/Bisphenol A Epoxy Resin + Catalyst Lonzacure™ DETDA80**

| **Catalyst Lonzacure™ DETDA80 (%)** | **Geltime (Gelnorm) [min]** | | | | | |
|---|---|---|---|---|---|---|
| | 60 °C | 80 °C | 100 °C | 120 °C | 130 °C | 140 °C |
| 0.5 | | 1208 | 388 | 136 | 98 | 61 |
| 1 | 1009 | 339 | 125 | 46 | 32 | 22 |
| 2 | 160 | 64 | 23 | 6,5 | 5 | n. d. |
| 5 | 18 | 7 | n. d. | n. d. | n. d. | n. d. |
| 10 | 8 | n. d. | n. d. | n. d. | n. d. | n. d. |

| | | | | | | |
|---|---|---|---|---|---|---|
| n. d.: not determined (too short) | | | | | | |

The viscosity of the blend Primaset™ PT-30 (68 wt.%)/Bisphenol A Epoxy (32 wt.%) resin system is shown in Table 11 below:

**Table 11: Viscosity of Primaset™ PT-30/Bisphenol A Epoxy**

| **Temperature [°C]** | **Viscosity [mPa×s]** |
|---|---|
| 30 | 54400 |
| 40 | 9400 |
| 60 | 830 |
| 80 | 165 |
| 100 | 59 |
| 120 | 25 |

### Example3

### Vacuum assisted resin transfer molding (VARTM) and resin infusion:

### TECHNICAL CHARACTERISTIC:

A flat glass mold was used. The mold was cleaned, and the surface was rubbed with a mold release agent. In this test, the liquid release agent Release All^{®} 45 from Airtech was used.

The carbon fiber fabric was cut into 25x25 cm² pieces and care was taken to prevent fiber pullout during handling of the cut plies. 16 plies were cut for each of the experimental laminates. In the test case, the carbon fabric fibers used were Toho Tenax HTA40 E13 (supplier: Toho Tenax Europe GmbH, Wuppertal, Germany). Then the carbon fiber fabric layers prepared were laid on the mold surface. Care was taken to build up a symmetric lay-up in order to prevent distortion during the post-cure stage.

In this example, an Airtech Omega Flow Line was used for both the resin feed and the vacuum line. The dimension of the Omega Flow Line was the same as the width of the carbon fiber layers on both sides (resin feed inlet and vacuum line outlet). Once the resin was infiltrated on one side, the resin feed line was filled on its complete length very quickly. After that, the resin infused across the whole carbon laminate lay-up toward the vacuum outlet.

The following resin infusion auxiliary materials were utilized: An "all-in-one" peel ply and release film layer (Fibertex Compoflex^{®} SB150) was cut and placed directly in contact over the carbon fiber layers. A resin distribution medium layer (Airtech Knitflow 105 HT) was cut and installed on the top of the previous layup (carbon fibers and peel ply/release film layers). The resin distribution medium allowed the spreading of the resin quickly in the whole composite part. The distribution layer was positioned as well as a basement of the Omega Flow Line (Airtech Omega Flow Lines OF750) for the resin feed inlet. On the other side of the mold (vacuum line outlet), a resin distribution layer and a Compoflex^{®} SB150 (Fibertex Nonwovens A/S, Aalborg, Denmark) layer were placed as a basement for the Omega Flow Line. All layers of material in contact with the mold were compressed to avoid "bridging" when vacuum was applied. High temperature resin infusion connectors (Airtech VAC-RIC-HT or RIC-HT) were attached to the middle of the resin feed inlet and vacuum outlet channels.

A customized rectangular vacuum bag was used which was heat seamed at three sides of its perimeter and specially designed for the mold dimension (Airtech Wrightlon^{®} WL5400 or WL7400). All the infusion assembly was set up inside the vacuum bag which was finally heat seamed on the one open side of its perimeter. Two small holes were punctured in the bag. The feed line and vacuum line connectors were attached to the bag over the holes and nylon tubes were installed. The assembled mold was connected with a resin source and a vacuum pump.

The whole mold assembly was installed inside an oven to infuse at the required temperature. Full vacuum and temperature was applied to the bag assembly for 3 up to 12 hours before infusion was started. It was beneficial to apply to the fiber lay-up and mold assembly the processing temperature conditions in order to improve the flow process and to remove the moisture picked-up from the fiber layers.

The vacuum pump was turned-on with a vacuum of 3-5 hPa, and excellent sealing was achieved by checking leakages. The oven temperature was increased to 80 °C at a heating rate of 3-5 K/min.

350 g of the Primaset™ PT-30/Bisphenol A diglycidyl ether epoxy resin blend (a mix of 238 g cyanate ester Primaset™ PT-30 and 112 g bisphenol A epoxy resin (Huntsman GY240)) was placed inside a vacuum oven at 80 °C and degassed at 3 hPa for 30 min to remove any air bubbles present in the resin. Then the amine catalyst Lonzacure™ DETDA80 (3.15 g, 0.9 wt%) was added at 80 °C and mixed till complete homogenization. The resin + amine catalyst system was placed in an oven at 80 °C and degassed again at 5 hPa for 5-10 minutes to remove any air bubbles created during the mixing with the catalyst.

The vacuum bag pressure was set to 10 mbar and the oven temperature was 80 °C. Heating the resin to 80 °C reduced the viscosity to the range of 150-300 mPa×s. At this viscosity, the Primaset™ PT-30/bisphenol A diglycidyl ether epoxy resin blend + amine catalyst Lonzacure™ DETDA could be successfully infused within 20-30 minutes and made to flow through the fibers under the bag.

The full vacuum of 10 hPa was kept till the resin reached cure point. The material was cured under the bagging assembly using the following cure cycle:
80 °C-120 °C, 1 K/min; 2 h @ 120 °C; 120 °C-140 °C, 1 K/min; 2 h @ 140 °C

After curing the material could be easily demolded from the bagging assembly. A post cure cycle can be applied as follows, in order to reach the mechanical and thermal performances desired: 25 °C-220 °C, 0.5 K/min, 2 h @ 220 °C.

A summary of the technical parameters is shown in Table 12 below.

**Table 12: Summary of the technical parameters of resin infusion:**

| **Parameters** | **Values** |
|---|---|
| Resin 1 (Primaset™ PT-30) | 238 g |
| Resin 2 (Bisphenol A Epoxy (GY240)) | 112 g |
| Catalyst (Liquid Amine Lonzacure™ DETDA80) | 3.15 g (0.9 wt.%) |
| Fiber (carbon fiber fabric) | Toho Tenax HTA40 E13 carbon, 285 g/m² |
| Fiber layup number | 16 |
| Degassing-time / temperature / pressure (Resin) | 30 min / 80 °C / 3 hPa |
| Degassing-time / temperature / pressure (Resin + catalyst) | 5-10 min / 80 °C / 5 hPa |
| Infusion temperature / mold temperature | 80 °C / 80 °C |
| Viscosity at infusion temperature (80 °C) | 160-200 mPa×s |
| Infusion pressure / infusion time | 10 mbar / 20-40 min |
| Cure cycle after resin infusion completed | 80 °C-120 °C, 1 K/min; 2 h @ 120 °C; 120 °C-140 °C, 1 K/min |
| Demold from bagging assembly | - |
| Post-cure cycle | 25 °C-220 °C, 0.5 K/min, 2 h @ 220 °C |

The *T*_{g} glass transition temperature was measured by Thermal Mechanical Analysis (TMA) as described in Example 1. The result is shown in Table 13 below:

**Table 13: Thermal Properties (Example 3)**

| | |
|---|---|
| Post cure cycle | 25-220 °C @ 0.5 K/min + 2 h @ 220 °C |
| *T*_{g} onset by TMA | 280-290 °C |

### Example 4

### Pultrusion:

### TECHNICAL CHARACTERISTIC:

A rectangular metal pultrusion mold was used, that formed a composite profile of 20 × 10 mm². The mold was cleaned, and the surface was rubbed with a mold release agent (Chemlease^{®} IC25).

The fiber reinforcement (carbon fiber Toho Tenax HTA (supplier: Toho Tenax Europe GmbH, Wuppertal, Germany)) was formed by 16 rovings. The fibers were directly pulled from the bobbin towards the resin bath.

The impregnated fibers entered the pultrusion mold and were pulled through the mold. The mold comprised four differently controlled heating zones, starting with a temperature of 150 °C and increasing to 160 °C, 170 °C and finally 180 °C at the mold outlet.

A Primaset™ PT-30 / bisphenol A diglycidyl ether epoxy resin blend (350 g, mix of 238 g cyanate ester Primaset™ PT-30 and 112 g bisphenol A epoxy resin (Huntsman GY240)) was mixed with 2% (7 g) of an internal mold release (Chemlease IC25, supplier: Chemtrend). Then the amine catalyst Lonzacure™ DETDA80 (8.75 g, 2.5 wt.%) was added at 80 °C and mixed till complete homogenization. The resin + amine catalyst system was placed into the resin bath which was kept at a constant temperature of 65 °C. Then the pultrusion process started as decribed. Finally a post cure cycle can be was applied: 25→220 °C @ 1 K/min + 2 h @ 220 °C.

The production speed achieved was 0.2 m/min. The samples manufactured showed a *Tg* (by DMA) of 80 °C after molding and 300 °C after postcure.

A summary of the technical parameters is shown in Table 14 below.

**Table 14: Summary of the technical parameters of pultrusion:**

| **Parameters** | **Values** |
|---|---|
| Resin 1 (Primaset™ PT-30) | 238 g |
| Resin 2 (Bisphenol A Epoxy (GY240)) | 112 g |
| Catalyst (Liquid Amine Lonzacure™ DETDA80 | 8.75 g (2.5 wt.%) |
| Internal mold release (Chemtrend Chemlease^{®} IC25) | 7 g (2.0 wt.%) |
| Fiber (carbon fiber rovings) | Toho Tenax HTA 16 rovings |
| Mixing temperature | 80 °C |
| Impregnation bath temperature | 65 °C |
| Mold temperatures (4 heating sections) | 150 °C, 160 °C, 170 °C, 180 °C |
| Viscosity after mixing (80 °C) | 120-200 mPa×s |
| Production speed | 0.15-0.22 m/min |
| Post-cure cycle | 25 °C→220 °C, 1 K/min, 2 h @ 220 °C |

The *T*_{g} glass transition temperature was measured by Thermal Mechanical Analysis (TMA) as described in Example 1. The result is shown in Table 17 below:

**Table 15: Thermal Properties (Example 4)**

| | |
|---|---|
| Post cure cycle | 25-220 °C @ 0.5 K/min + 2 h @ 220 °C |
| *T*_{g} onset by TMA | 250-265 °C |

### Example 5

### Filament winding:

### TECHNICAL CHARACTERISTIC:

A cylindrical mandrel was used to form a composite pipe with an inner diameter of 40 mm. The mandrel was cleaned, and the surface was rubbed with a mold release agent.

The fiber reinforcement (carbon fiber Toho Tenax HTA (supplier: Toho Tenax Europe GmbH, Wuppertal, Germany)) was formed by 4 rovings. The fibers were directly pulled from the bobbin through the resin bath which was kept at a constant temperature of 65 °C. The impregnated fibers were placed on the mandrel in different angles of ±30° and 89° to form 18 layers, resulting in a pipe wall thickness of 4.4 mm.

The mandrel and the impregnated fibers placed hereon were kept at a constant temperature of 80 °C.

A resin blend of Primaset™ PT-30 cyanate ester and bisphenol A diglycidyl ether epoxy resin (350 g, a mix of 238 g Primaset™ PT-30 and 112 g bisphenol A epoxy resin (Huntsman GY240)) was mixed with the amine catalyst Lonzacure™ DETDA80 (7 g, 2 wt%) at 70 °C complete homogenization. The resin + amine catalyst system was placed into the resin bath at 65 °C. Then the filament winding process started as described, followed by a precure cycle at 80 °C for 24 h, cooling to ambient temperature (cooling rate 1 K/min), and demolding from the mandrel at ambient. Finally, the pipe was subjected to a postcure treatment at 25 °C→220 °C, 1 K/min and 2 h @ 220 °C. A summary of the technical parameters is shown in Table 16 below.

**Table 16: Summary of the technical parameters by filament winding:**

| **Parameters** | **Values** |
|---|---|
| Resin 1 (Primaset™ PT-30) | 238 g |
| Resin 2 (Bisphenol A Epoxy (GY240)) | 112 g |
| Catalyst (Liquid Amine Lonzacure™ DETDA80 | 7 g (2.0 wt.%) |
| Fiber (carbon fiber rovings) | Toho Tenax HTA 4 rovings |
| Mixing temperature | 80 °C |
| Impregnation bath temperature | 65 °C |
| Viscosity at impregnation temperature (65 °C) | <500 mPa×s |
| Production speed (fiber speed) | 10-18 m/min |
| Pipe dimensions | Inner diameter: 40 mm, Outer diameter: 48.8 mm |
| Precure | 24 h @ 80 °C |
| Post-cure cycle | 25 °C→220 °C, 1 K/min, 2 h @ 220 °C |

The *T*_{g} glass transition temperature was measured by Thermal Mechanical Analysis (TMA) as described in Example 1. The result is shown in Table 17 below:

**Table 17: Thermal Properties (Example 5)**

| | |
|---|---|
| Post cure cycle | 25-220 °C @ 1 K/min + 2 h @ 220 °C |
| *T*_{g} onset by TMA | 240-260 °C |

### Examples 6-14

Primaset ™ PT-30 cyanate resin was tested with various catalysts. The samples were prepared by heating the resin to 95 °C, the adding the catalyst and mixing till complete homogenization.

The samples were subjected to a curing cycle comprising heating from 25 °C to 140 °C at 1 K/min and keeping at 140 °C for 30 min, followed by a post curing treatment comprising heating from 25 °C to 200 °C at 1 K/min, keeping at 200 °C for 1 h, heating from 200 °C to 260 °C at 1 K/min, and keeping at 260 °C for 1 h.

The *T*_{g} glass transition temperature was measured by Thermal Mechanical Analysis (TMA) as described above. The test method applied two heating ramps (first ramp: 25-250 °C @ 10 K/min, second ramp: 25-400 °C @ 10 K/min). The *T*_{g} was evaluated on the second ramp. The results are compiled in Table 18, together with the methods suitable for preparing fiber-reinforced parts from each composition.

**Table 18**

| **Example Nº** | **Catalyst** | | **Gel Time @ 140 °C** | ***T*_{g} Onset [°C]** | **Methods (Example Nos.)** |
|---|---|---|---|---|---|
| | **Name** | **Amount** | | | |
| 6 | Lonzacure™ M-CDEA | 3 wt.% | 11 min | >300 | 1, 2 |
| 7 | Lonzacure™ M-DEA | 2 wt.% | 13 min | 260-270 | 1, 2 |
| 8 | Albemarle Ethacure^{®} 300¹⁾ | 2 wt.% | 17 min | 280-290 | 1, 2, 3, 4, 5 |
| 9 | Albemarle Ethacure^{®} 420²⁾ | 4 wt.% | 19 min | 280-290 | 1, 2, 3, 4, 5 |
| 10 | OMICURE™ BC-120³⁾ | 2 wt.% | 4 min | >300 | 1, 5 |
| 11 | 2-Ethyl-4-methylimidazole | 5 wt.% | 17 min | 260-265 | 1, 5 |
| 12 | 2-Ethyl im idazole | 5 wt.% | 25 min | 270-280 | 1, 2 |
| 13 | Alkylpyridine mixture⁴⁾ | 5 wt.% | 17 min | 280-290 | 1, 5 |
| 14 | Lonzacure™ DETDA 80 | 1.5 wt.% | 9 min | >300 | 1, 2, 3, 4, 5 |

| | | | | | |
|---|---|---|---|---|---|
| ¹⁾ Mixture of 3,5-bis(methylthio)toluene-2,4-diamine and 3,5-bis(methylthio)toluene-2,6-diamine ²⁾ 4,4'-Methylenebis-(*N-sec*-butylaniline) ³⁾ *N,N*-Dimethyl-*n*-octylamine, boron trichloride complex ⁴⁾ Mixture of alkyl- and alkenylpyridines, comprising ca. 40% 5-(2-butenyl)-2-methyl-pyridines (*cis*/*trans* mixture, ratio about 1:3), ca. 12% 2-allyl-5-ethylpyridine, ca. 9% 3,5-diethyl-2-methylpyridine, ca. 6% 5-ethyl-2-propylpyridine | | | | | |

### Examples 15-28:

A blend of Primaset ™ PT-30 cyanate resin and bisphenol A diglycidyl ether epoxy resin was tested with various catalysts. The samples were prepared by heating the resins to 95 °C, the adding the catalyst and mixing till complete homogenization.

The samples were subjected to a curing cycle comprising heating from 25 °C to 140 °C at 1 K/min and keeping at 140 °C for 30 min, followed by a post curing treatment comprising heating from 25 °C to 220 °C at 1 K/min and keeping at 220 °C for 2 h.

The *T*_{g} glass transition temperature was measured by Thermal Mechanical Analysis (TMA) as described above. The test method applied two heating ramps (first ramp: 25→200 °C @ 10 K/min, second ramp: 25-350 °C @ 10 K/min). The *T*_{g} was evaluated on the second ramp. The results are compiled in Table 19, together with the methods suitable for preparing fiber-reinforced parts from each composition.

**Table 19**

| **Example Nº** | **Catalyst** | | **Gel Time @ 140 °C** | ***T*_{g} Onset [°C]** | **Methods (Example Nos.)** |
|---|---|---|---|---|---|
| | **Name** | **Amount** | | | |
| 15 | Lonzacure™ M-CDEA | 3 wt.% | 14 min | 270-280 | 1, 2 |
| 16 | Lonzacure™ M-DEA | 2 wt.% | 9 min | 275-285 | 1, 2 |
| 17 | Albemarle Ethacure^{®} 300¹⁾ | 2 wt.% | 18 min | 260-270 | 1, 2, 3, 4, 5 |
| 18 | Albemarle Ethacure^{®} 420²⁾ | 3 wt.% | 12 min | 260-270 | 1, 2, 3, 4, 5 |
| 19 | N,N-Dimethylbenzylamine | 3 wt.% | 6 min | 190-200 | 1, 2 |
| 20 | 2,4,6-Tris(dimethylaminomethyl)phenol | 3 wt.% | 12 min | 280-290 | 1, 2 |
| 21 | OMICURE™ BC-120³⁾ | 3 wt.% | 5 min | 180-190 | 1, 5 |
| 22 | 2-Ethyl-4-methylimidazole | 3 wt.% | 15 min | 190-200 | 1, 5 |
| 23 | 2-Ethylimidazole | 3 wt.% | 12 min | 200-205 | 1, 2 |
| 24 | 5-Ethyl-2-methylpyridine | 2 wt.% | 9 min | 250-260 | 1, 5 |
| 25 | Alkylpyridine mixture⁴⁾ | 2 wt.% | 13 min | 240-250 | 1, 5 |
| 26 | Niacinamide | 2 wt.% | 11 min | 240-250 | 1, 2 |
| 27 | 1-Butyl-3-methyl-pyridinium dicyanoamide | 5 wt.% | 28 min | 190-200 | 1, 5 |
| 28 | Lonzacure™ DETDA 80 | 1.5 wt.% | 9 min | 270-280 | 1, 2, 3, 4, 5 |

| | | | | | |
|---|---|---|---|---|---|
| ¹⁾ Mixture of 3,5-bis(methylthio)toluene-2,4-diamine and 3,5-bis(methylthio)toluene-2,6-diamine ²⁾ 4,4'-Methylenebis-(*N*-*sec*-butylaniline) ³⁾ *N,N*-Dimethyl-*n*-octylamine, boron trichloride complex ⁴⁾ Mixture of alkyl- and alkenylpyridines, comprising ca. 40% 5-(2-butenyl)-2-methyl-pyridines (*cis*/*trans* mixture, ratio about 1:3), ca. 12% 2-allyl-5-ethylpyridine, ca. 9% 3,5-diethyl-2-methylpyridine, ca. 6% 5-ethyl-2-propylpyridine | | | | | |

## Claims

1. A method for preparing a fiber-reinforced part based on cyanate ester or a cyanate ester/epoxy blend, comprising the steps of
(i) providing a liquid mixture, that is liquid at ambient temperature, comprising
(a) from 15 to 99.9 wt.% of at least one di- or polyfunctional cyanate ester selected from the group consisting of difunctional cyanate esters of formula 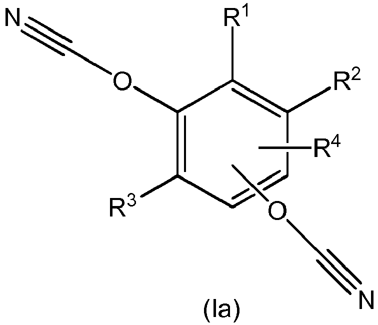 wherein R¹ through R⁴ are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy,
difunctional cyanate esters of formula 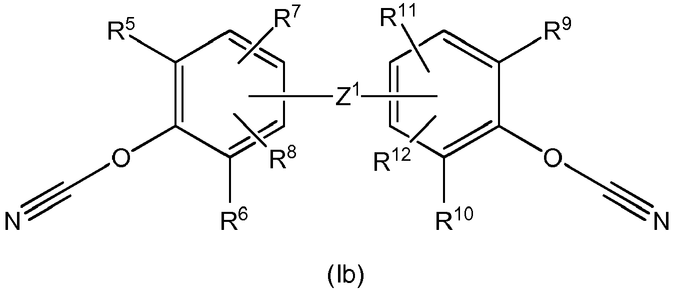 wherein R⁵ through R¹² are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy;
and Z¹ indicates a direct bond or a divalent moiety selected from the group consisting of -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linear C₁₋₁₀ alkanediyl, branched C₄₋₁₀ alkanediyl, C₃₋₈ cycloalkanediyl, 1,2-phenylene, 1,3-phenylene, 1,4-phenylene, -N(R¹³)- wherein R¹³ is selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, phenyl and phenoxy, and moieties of formulas 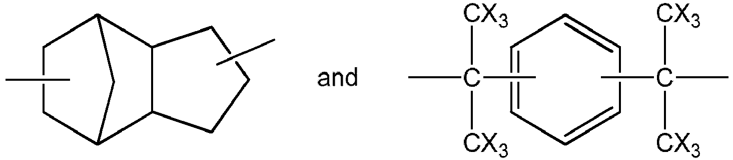 wherein X is hydrogen or fluorine;
and polyfunctional cyanate esters of formula 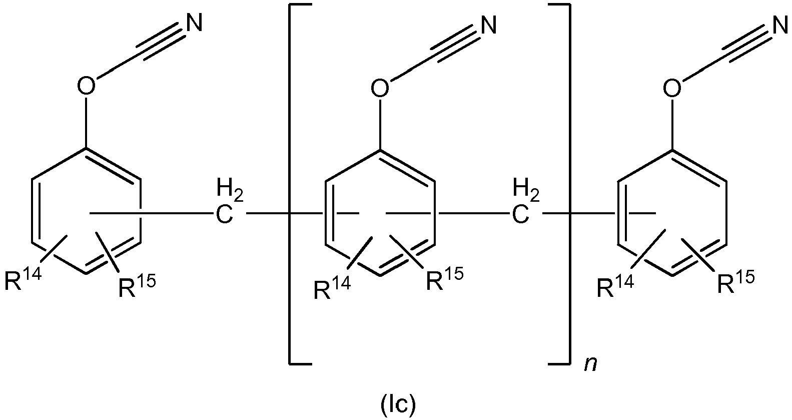 and oligomeric mixtures thereof, wherein n is an integer from 1 to 20 and R¹⁴ and R¹⁵ are independently selected from the group consisting of hydrogen, linear C₁₋₁₀ alkyl and branched C₄₋₁₀ alkyl;
(b) from 0 to 84.9 wt.% of at least one di- or polyfunctional epoxy resin selected from the group consisting of epoxy resins of formula 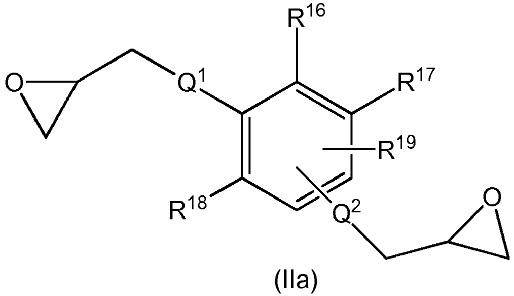 wherein Q¹ and Q² are independently oxygen or - N(G)- with G = oxiranylmethyl, and R¹⁶ through R¹⁹ are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy;
epoxy resins of formula 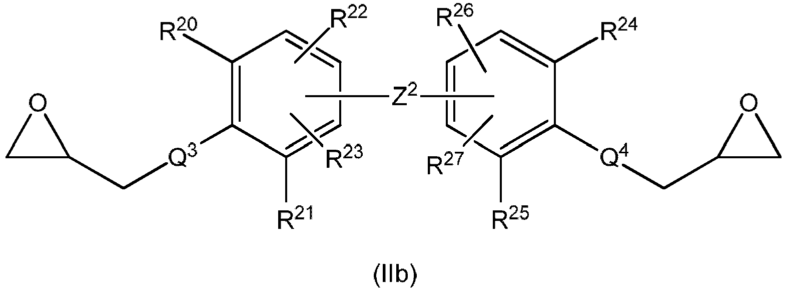 wherein Q³ and Q⁴ are independently oxygen or -N(G)- with G = oxiranylmethyl, R²⁰ through R²⁷ are independently selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, halogenated C₃₋₈ cycloalkyl, C₁₋₁₀ alkoxy, halogen, phenyl and phenoxy, and Z² indicates a direct bond or a divalent moiety selected from the group consisting of -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linear C₁₋₁₀ alkanediyl, branched C₄₋₁₀ alkanediyl, C₃₋₈ cycloalkanediyl, 1,2-phenylene, 1,3-phenylene, 1,4-phenylene, glycidyloxyphenylmethylene, and -N(R²⁸)- wherein R²⁸ is selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, phenyl and phenoxy;
epoxy resins of formula 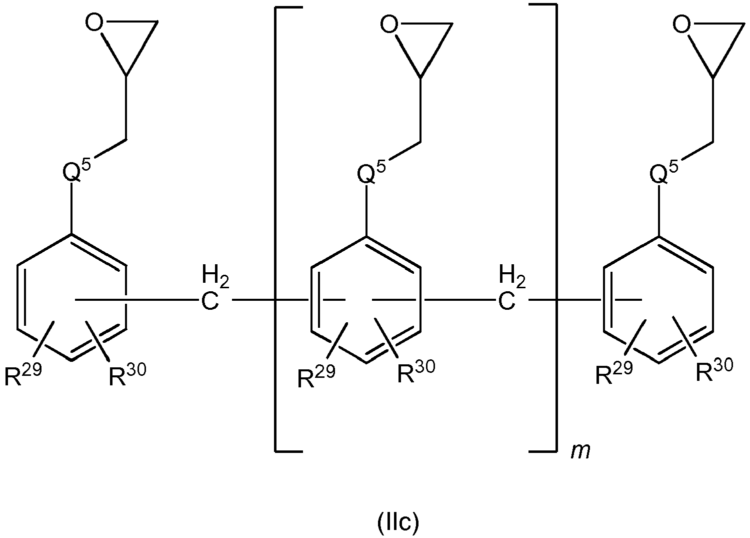 and oligomeric mixtures thereof, wherein m is an integer from 1 to 20, Q⁵ is oxygen or -N(G)- with G = oxiranylmethyl, and R²⁹ and R³⁰ are independently selected from the group consisting of hydrogen, linear C₁₋₁₀ alkyl and branched C₄₋₁₀ alkyl; and naphthalenediol diglycidyl ethers;
and
(c) from 0.1 to 25 wt.% of a metal-free catalyst;
the metal-free catalyst is selected from the group consisting of aromatic diamines of formula 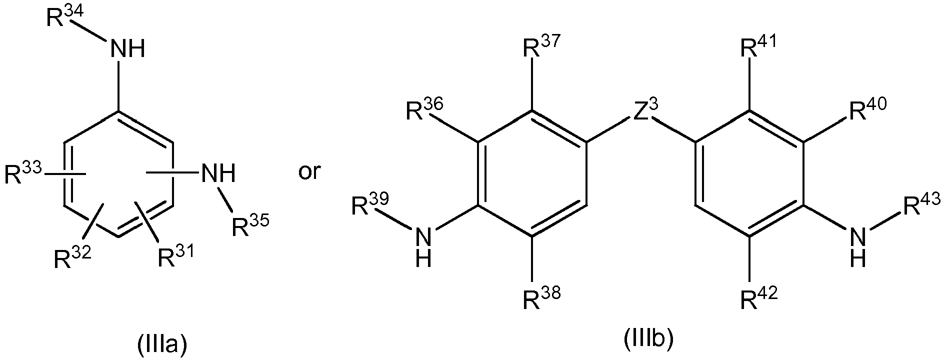 wherein R³¹, R³², R³³, R³⁶, R³⁶, R³⁷, R³⁸, R⁴⁰, R⁴¹ and R⁴² are independently selected from hydrogen, C₁₋₄ alkyl, C₁₋₄ alkoxy, C₁₋₄ alkylthio, and chlorine; R³⁴, R³⁵, R³⁹ and R⁴³ are independently selected from hydrogen and C₁₋₈ alkyl, and mixtures thereof; and Z³ indicates a direct bond or a divalent moiety selected from the group consisting of -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linear C₁₋₁₀ alkanediyl, branched C₄₋₁₀ alkanediyl, C₃₋₈ cycloalkanediyl, 1,2-phenylene, 1,3-phenylene, 1,4-phenylene, and -N(R⁴⁴)- wherein R⁴⁴ is selected from the group consisting of hydrogen, linear C₁₋₁₀ alkyl, halogenated linear C₁₋₁₀ alkyl, branched C₄₋₁₀ alkyl, halogenated branched C₄₋₁₀ alkyl, C₃₋₈ cycloalkyl, phenyl and phenoxy;
wherein the percentages of (a), (b) and (c) are based on the total amount of (a), (b) and (c);
(ii) providing a fiber structure
(iii) placing said fiber structure in a mold or on a substrate,
(iv) impregnating said fiber structure with said liquid mixture, optionally by applying elevated pressure and/or evacuating the air from the mold and fiber structure, at a temperature of 20 to 80 °C, and
(v) curing said liquid mixture by applying a temperature of 30 to 300 °C, preferably 30 to 220 °C, for a time sufficient to cure said mixture.

2. The method of claim 1, wherein the impregnation in step (iii) is achieved using a method selected from the group consisting of resin transfer molding, vacuum assisted resin transfer molding, liquid resin infusion, Seemann Composites Resin Infusion Molding Process, vacuum assisted resin infusion, injection molding, compression molding, spray molding, pultrusion, laminating and filament winding.

3. The method of claim 1 or 2, wherein the catalyst (c) is selected from the group consisting of 3,5-diethyltoluene-2,4-diamine, 3,5-diethyltoluene-2,6-diamine, 3,5-bis(methylthio)toluene-2,4-diamine, 3,5-bis(methylthio)toluene-2,6-diamine, 4,4'-methylenebis(2,6-diisopropylaniline), 4,4'-methylenebis(2-isopropyl-6-methylaniline), 4,4'-methylenebis(2,6-diethylaniline), 4,4'-methylenebis(3-chloro-2,6-diethylaniline), 4,4'-methylenebis(2-ethyl-6-methylaniline), 4,4'-methylene-bis(*N*-*sec*-butylaniline), and mixtures thereof.

4. The method of any of claims 1 to 3, wherein the at least one di- or polyfunctional cyanate ester (a) is a cyanate ester of formula (Ic) wherein R¹⁴ and R¹⁵ are hydrogen and the average value of *n* is from 1 to 20, preferably 1 to 5.

5. The method of any of claims 1 to 4, wherein the at least one di- or polyfunctional epoxy resin (b) is selected from the group consisting of bisphenol A diglycidyl ether resins, bisphenol F diglycidyl ether resins, *N,N,O*-triglycidyl-3-aminophenol, *N,N,O*-triglycidyl-4-aminophenol, *N,N,N',N*'-tetraglycidyl-4,4'-methylenebisbenzenamine, 4,4',4"-methylidenetrisphenol triglycidyl ether resins, naphthalenediol diglycidyl ethers, and mixtures thereof.

6. The method of any of claims 1 to 5, wherein the liquid mixture obtained in step (i) comprises from 20 to 80 wt.% of the at least one di- or polyfunctional cyanate ester (a).

7. The method of any of claims 1 to 6, wherein the liquid mixture obtained in step (i) comprises from 20 to 79 wt.% of the at least one di- or polyfunctional epoxy resin (b).

8. The method of any of claims 1 to 7, wherein the liquid mixture obtained in step (i) comprises from 0.1 to 10 wt.% of the catalyst (c).

9. The method of any of claims 1 to 8, wherein the liquid mixture obtained in step (i) comprises less than 20 wt.%, based on the total weight of the liquid mixture, of a solvent.

10. The method of claim 9, wherein the liquid mixture obtained in step (i) comprises less than 10 wt.%, based on the total weight of the liquid mixture, of a solvent.

11. The method of claim 10, wherein the liquid mixture obtained in step (i) is solvent-free.

12. The method of any of claims 1 to 11, wherein the fiber structure provided in step (ii) is selected from the group consisting of carbon fibers, glass fibers, quartz fibers, boron fibers, ceramic fibers, aramid fibers, polyester fibers, polyethylene fibers, natural fibers, and mixtures thereof.

13. The method of any of claims 1 to 12, wherein the fiber structure provided in step (ii) is selected from the group consisting of strands, yarns, rovings, unidirectional fabrics, 0/90° fabrics, woven fabrics, hybrid fabrics, multiaxial fabrics, chopped strand mats, tissues, braids, and combinations thereof.

14. The method of any of claims 1 to 13, wherein the liquid mixture obtained in step (i) comprises one or more additional components selected from the group consisting of mold release agents, fillers, reactive diluents, and combinations thereof.

15. A fiber-reinforced part obtainable by the method of any of claims 1 to 14.

16. The fiber-reinforced part of claim 15, being selected from the group consisting of fiber reinforced panels, complex geometries, parts with rotational symmetry parts, massive and hollow profiles, and sandwich-structured parts.

## Patentansprüche

1. Verfahren zur Herstellung eines faserverstärkten Teils auf Basis von Cyanatester oder einer Cyanatester/Epoxid-Mischung, das folgende Schritte umfasst:
(i) Bereitstellen einer flüssigen Mischung, die bei Umgebungstemperatur flüssig ist, umfassend
(a)15 bis 99,9 Gew.-% mindestens eines di- oder polyfunktionellen Cyanatesters aus der Gruppe bestehend aus difunktionellen Cyanatestern der Formel 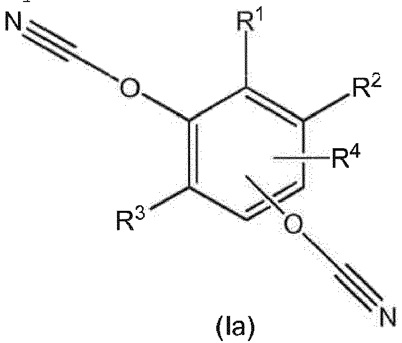 worin R¹ bis R⁴ unabhängig aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, halogeniertem C₃₋₈-Cycloalkyl, C₁₋₁₀-Alkoxy, Halogen, Phenyl und Phenoxy ausgewählt sind,
difunktionellen Cyanatestern der Formel 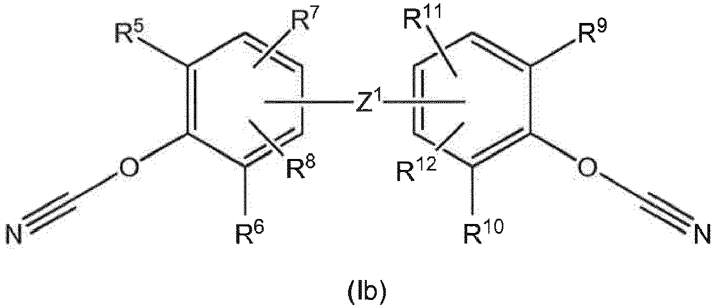 worin R⁵ bis R¹² unabhängig aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, halogeniertem C₃₋₈-Cycloalkyl, C₁₋₁₀-Alkoxy, Halogen, Phenyl und Phenoxy ausgewählt sind
und Z¹ eine direkte Bindung oder eine zweiwertige Gruppierung aus der Gruppe bestehend aus -O-, -S-, -S(=O)-, -S(=O)₂--CH(CF₃)-, -C(CF₃)₂-, -C(=O)-, -C(=CH₂)-, -C(=CCl₂)-, -Si(CH₃)₂-, linearem C₁₋₁₀-Alkandiyl, verzweigtem C₄₋₁₀-Alkandiyl, C₃₋₈-Cycloalkandiyl, 1,2-Phenylen, 1,3-Phenylen, 1,4-Phenylen, -N(R¹³)-, worin R¹³ aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, Phenyl und Phenoxy ausgewählt ist, und Gruppierungen der Formeln 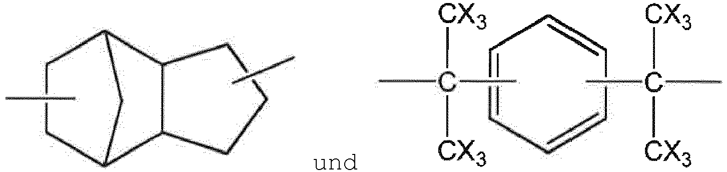 worin X für Wasserstoff oder Fluor steht,
darstellt;
und polyfunktionellen Cyanatestern der Formel 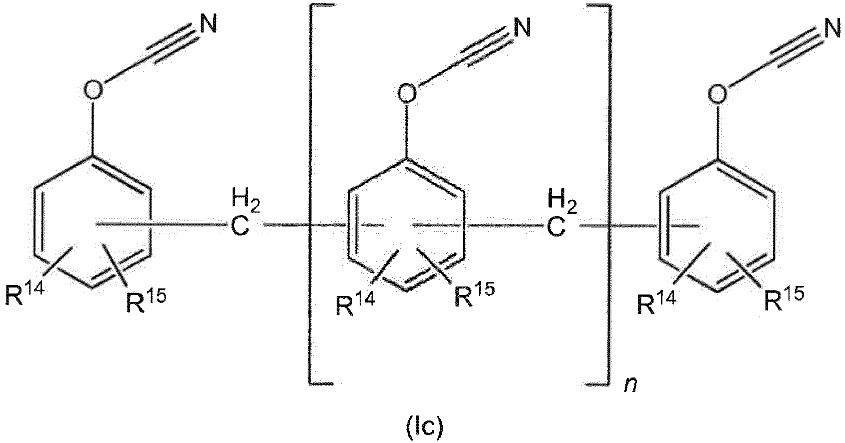 und Oligomergemischen davon, worin n für eine ganze Zahl von 1 bis 20 steht und R¹⁴ und R¹⁵ unabhängig aus der Gruppe bestehend aus Wasserstoff, linearem C₁₋₁₀-Alkyl und verzweigtem C₄₋₁₀-Alkyl ausgewählt sind;
(b)0 bis 84,9 Gew.-% mindestens eines di- oder polyfunktionellen Epoxidharzes aus der Gruppe bestehend aus Epoxidharzen der Formel 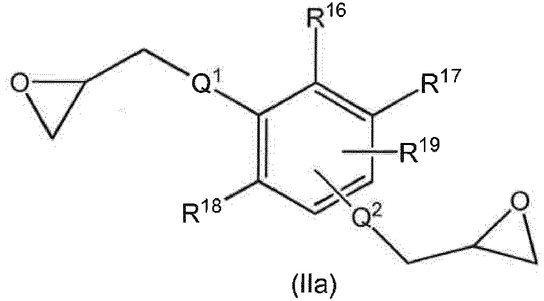 worin Q¹ und Q² unabhängig für Sauerstoff oder -N(G)- mit G = Oxiranylmethyl stehen und R¹⁶ bis R¹⁹ unabhängig aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, halogeniertem C₃₋₈-Cycloalkyl, C₁₋₁₀-Alkoxy, Halogen, Phenyl und Phenoxy ausgewählt sind; Epoxidharzen der Formel 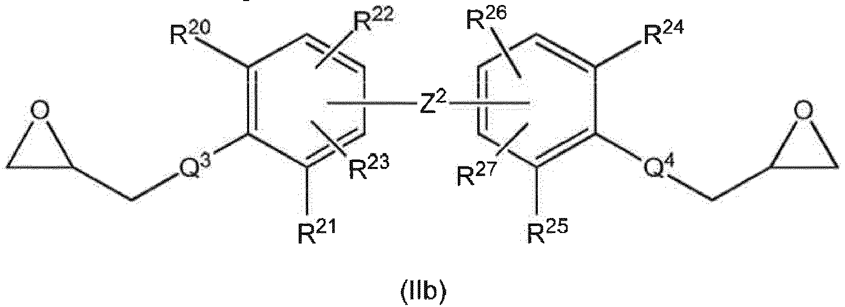 worin Q³ und Q⁴ unabhängig für Sauerstoff oder -N(G)- mit G = Oxiranylmethyl stehen, R²⁰ bis R²⁷ unabhängig aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, halogeniertem C₃₋₈-Cycloalkyl, C₁₋₁₀-Alkoxy, Halogen, Phenyl und Phenoxy ausgewählt sind und Z² eine direkte Bindung oder eine zweiwertige Gruppierung aus der Gruppe bestehend aus -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, linearem C₁₋₁₀-Alkandiyl, verzweigtem C₄₋₁₀-Alkandiyl, C₃₋₈-Cycloalkandiyl, 1,2-Phenylen, 1,3-Phenylen, 1,4-Phenylen, Glycidyloxyphenylmethylen und -N(R²⁸)-, worin R²⁸ aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, Phenyl und Phenoxy ausgewählt ist, darstellt;
Epoxidharzen der Formel 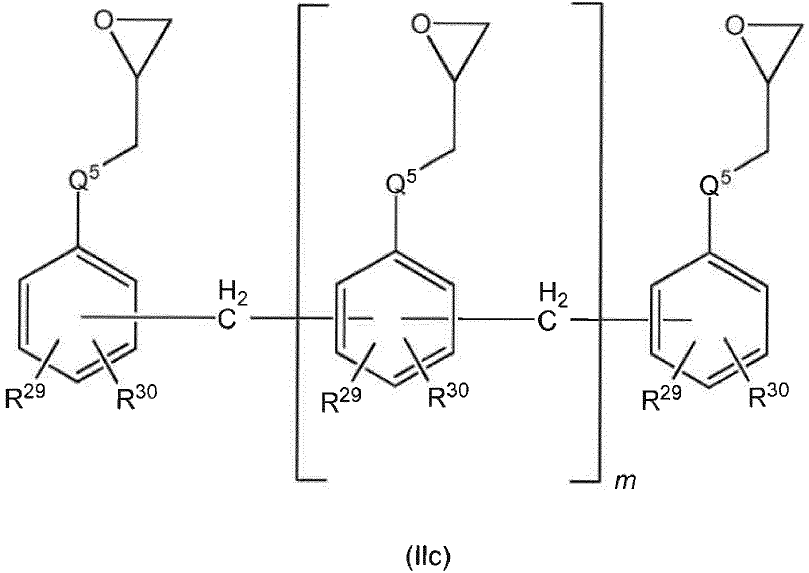 und Oligomergemischen davon, worin m für eine ganze Zahl von 1 bis 20 steht, Q⁵ für Sauerstoff oder -N(G)- mit G = Oxiranylmethyl steht und R²⁹ und R³⁰ unabhängig aus der Gruppe bestehend aus Wasserstoff, linearem C₁₋₁₀-Alkyl und verzweigtem C₄₋₁₀-Alkyl ausgewählt sind; und Naphthalindioldiglycidylethern; und
(c)0,1 bis 25 Gew.-% eines metallfreien Katalysators;
wobei der metallfreie Katalysator ausgewählt ist aus der Gruppe bestehend aus aromatischen Diaminen der Formel 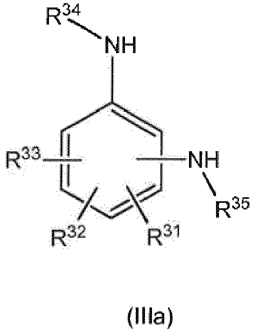 oder 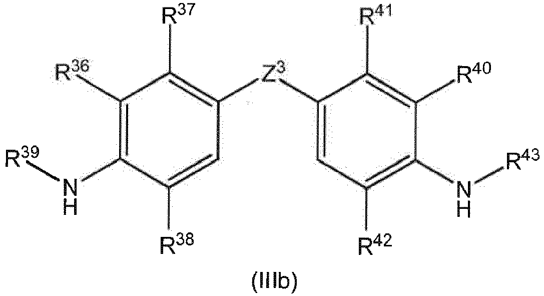 worin R³¹, R³², R³³, R³⁶, R³⁶, R³⁷, R³⁸, R⁴⁰, R⁴¹ und R⁴² unabhängig aus Wasserstoff, C₁₋₄-Alkyl, C₁₋₄-Alkoxy, C₁₋₄-Alkylthio und Chlor ausgewählt sind; R³⁴, R³⁵, R³⁹ und R⁴³ unabhängig aus Wasserstoff und C₁₋₈-Alkyl und Mischungen davon ausgewählt sind und Z³ eine direkte Bindung oder eine zweiwertige Gruppierung aus der Gruppe bestehend aus - O-, -S-, -S(=O)-, -S(=O)₂-, -CH(CF₃)-,-C(CF₃)₂-, -C(=O)-, -C(=CH₂)-, -C(=CCl₂)-,-Si(CH₃)₂-, linearem C₁₋₁₀-Alkandiyl, verzweigtem C₄₋₁₀-Alkandiyl, C₃₋₈-Cyclo-alkandiyl, 1,2-Phenylen, 1,3-Phenylen, 1,4-Phenylen und -N(R⁴⁴)-, worin R⁴⁴ aus der Gruppe bestehend aus Wasserstoff, linearem C₁₋₁₀-Alkyl, halogeniertem linearem C₁₋₁₀-Alkyl, verzweigtem C₄₋₁₀-Alkyl, halogeniertem verzweigtem C₄₋₁₀-Alkyl, C₃₋₈-Cycloalkyl, Phenyl und Phenoxy ausgewählt ist, darstellt;
wobei die Prozentanteile von (a), (b) und (c) auf der Gesamtmenge von (a), (b) und (c) basieren;
(ii) Bereitstellen einer Faserstruktur,
(iii) Platzieren der Faserstruktur in einer Form oder auf einem Substrat,
(iv) Imprägnieren der Faserstruktur mit der flüssigen Mischung, gegebenenfalls durch Anwenden von erhöhtem Druck und/oder Evakuieren der Luft aus der Form und Faserstruktur, bei einer Temperatur von 20 bis 80 °C und
(v) Härten der flüssigen Mischung durch Anwenden einer Temperatur von 30 bis 300 °C, vorzugsweise 30 bis 220 °C, über einen zur Härtung der Mischung ausreichenden Zeitraum.

2. Verfahren nach Anspruch 1, bei dem die Imprägnierung in Schritt (iii) unter Verwendung eines Verfahrens aus der Gruppe bestehend aus Resin Transfer Molding, Vacuum Assisted Resin Transfer Molding, Liquid Resin Infusion, Seemann Composites Resin Infusion Molding Process, Vacuum Assisted Resin Infusion, Spritzguss, Formpressen, Sprühformen, Pultrusion, Laminieren und Fadenwickeln bewerkstelligt wird.

3. Verfahren nach Anspruch 1 oder 2, bei dem der Katalysator (c) aus der Gruppe bestehend aus 3,5-Diethyltoluol-2,4-diamin, 3,5-Diethyltoluol-2,6-diamin, 3,5-Bis(methylthio)toluol-2,4-diamin, 3,5-Bis(methylthio)toluol-2,6-diamin, 4,4'-Methylen-bis(2,6-diisopropylanilin), 4,4'-Methylenbis(2-isopropyl-6-methylanilin), 4,4'-Methylenbis(2,6-diethylanilin), 4,4'-Methylenbis(3-chlor-2,6-diethylanilin), 4,4'-Methylenbis(2-ethyl-6-methylanilin), 4,4'-Methylenbis(*N-sec*-butylanilin) und Mischungen davon ausgewählt wird.

4. Verfahren nach einem der Ansprüche 1 bis 3, bei dem es sich bei dem mindestens einen di- oder polyfunktionellen Cyanatester (a) um einen Cyanatester der Formel (Ic), worin R¹⁴ und R¹⁵ für Wasserstoff stehen und der durchschnittliche Wert von n 1 bis 20, vorzugsweise 1 bis 5, beträgt, handelt.

5. Verfahren nach einem der Ansprüche 1 bis 4, bei dem das mindestens eine di- oder polyfunktionelle Epoxidharz (b) aus der Gruppe bestehend aus Bisphenol-A-diglycidyletherharzen, Bisphenol-F-diglycidyletherharzen, *N,N,O*-Triglycidyl-3-aminophenol, *N,N,O*-Triglycidyl-4-aminophenol, *N,N,N',N*'-Tetraglycidyl-4,4'-methylenbisbenzolamin, 4,4',4"-Methylidentrisphenoltriglycidyletherharzen, Naphthalindioldiglycidylethern und Mischungen davon ausgewählt wird.

6. Verfahren nach einem der Ansprüche 1 bis 5, bei dem die in Schritt (i) erhaltene flüssige Mischung 20 bis 80 Gew.-% des mindestens einen di- oder polyfunktionellen Cyanatesters (a) umfasst.

7. Verfahren nach einem der Ansprüche 1 bis 6, bei dem die in Schritt (i) erhaltene flüssige Mischung 20 bis 79 Gew.-% des mindestens einen di- oder polyfunktionellen Epoxidharzes (b) umfasst.

8. Verfahren nach einem der Ansprüche 1 bis 7, bei dem die in Schritt (i) erhaltene flüssige Mischung 0,1 bis 10 Gew.-% des Katalysators (c) umfasst.

9. Verfahren nach einem der Ansprüche 1 bis 8, bei dem die in Schritt (i) erhaltene flüssige Mischung weniger als 20 Gew.-%, bezogen auf das Gesamtgewicht der flüssigen Mischung, eines Lösungsmittels umfasst.

10. Verfahren nach Anspruch 9, bei dem die in Schritt (i) erhaltene flüssige Mischung weniger als 10 Gew.-%, bezogen auf das Gesamtgewicht der flüssigen Mischung, eines Lösungsmittels umfasst.

11. Verfahren nach Anspruch 10, bei dem die in Schritt (i) erhaltene flüssige Mischung lösungsmittelfrei ist.

12. Verfahren nach einem der Ansprüche 1 bis 11, bei dem die in Schritt (ii) bereitgestellte Faserstruktur aus der Gruppe bestehend aus Kohlenstofffasern, Glasfasern, Quarzfasern, Borfasern, Keramikfasern, Aramidfasern, Polyesterfasern, Polyethylenfasern, natürlichen Fasern und Mischungen davon ausgewählt wird.

13. Verfahren nach einem der Ansprüche 1 bis 12, bei dem die in Schritt (ii) bereitgestellte Faserstruktur aus der Gruppe bestehend aus Strängen, Garnen, Rovings, unidirektionalen textilen Flächengebilden, textilen 0/90°-Flächengebilden, Vliesstoffen, textilen Hybridflächengebilden, multiaxialen textilen Flächengebilden, Schnittmatten, Tissues, Geflechten und Kombinationen davon ausgewählt wird.

14. Verfahren nach einem der Ansprüche 1 bis 13, bei dem die in Schritt (i) erhaltene flüssige Mischung eine oder mehrere zusätzliche Komponenten aus der Gruppe bestehend aus Formtrennmitteln, Füllstoffen, reaktiven Verdünnungsmitteln und Kombinationen davon umfasst.

15. Faserverstärktes Teil, das durch das Verfahren nach einem der Ansprüche 1 bis 14 erhältlich ist.

16. Faserverstärktes Teil nach Anspruch 15, das aus der Gruppe bestehend aus faserverstärkten Platten, komplexen Geometrien, Teilen mit rotationssymmetrischen Teilen, Voll- und Hohlprofilen und Teilen mit Sandwichstruktur ausgewählt ist.

## Revendications

1. Procédé pour la préparation d'une pièce à base d'un ester cyanate ou d'un mélange ester cyanate/époxy renforcée par des fibres, comprenant les étapes consistant à
(i) fournir un mélange liquide, qui est liquide à température ambiante, comprenant
(a) de 15 à 99,9 % en poids d'au moins un ester cyanate difonctionnel ou polyfonctionnel choisi dans le groupe constitué par
les esters cyanates difonctionnels de formule 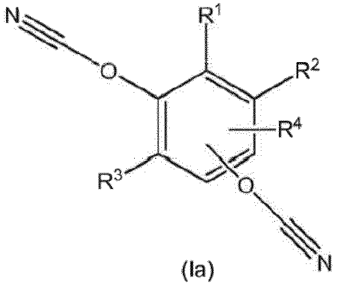 dans lesquels R¹ à R⁴ sont indépendamment choisis dans le groupe constitué par l'atome d'hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, cycloalkyle en C₃₋₈ halogénés, alcoxy en C₁₋₁₀, halogéno, phényle et phénoxy,
les esters cyanates difonctionnels de formule 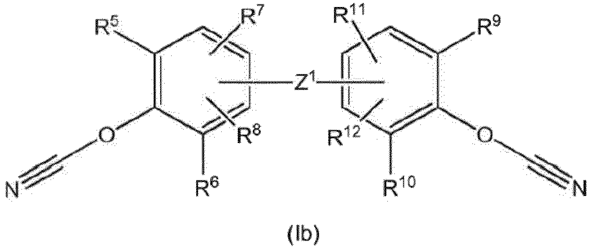 dans lesquels R⁵ à R¹² sont indépendamment choisis dans le groupe constitué par l'atome d' hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, cycloalkyle en C₃₋₈ halogénés, alcoxy en C₁₋₁₀, halogéno, phényle et phénoxy ;
et Z¹ désigne une liaison directe ou une fraction divalente choisie dans le groupe constitué par les fractions -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, alcanediyle en C₁₋₁₀ linéaires, alcanediyle en C₄₋₁₀ ramifiées, cycloalcanediyle en C₃₋₈, 1,2-phénylène, 1,3-phénylène, 1,4-phénylène, -N(R¹³)-, R¹³ étant choisi dans le groupe constitué par l'atome d'hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, phényle et phénoxy, et les fractions représentées par les formules 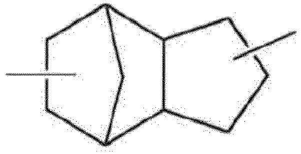 et 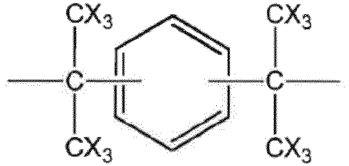 X étant un atome d'hydrogène ou de fluor ;
et les esters cyanates polyfonctionnels de formule 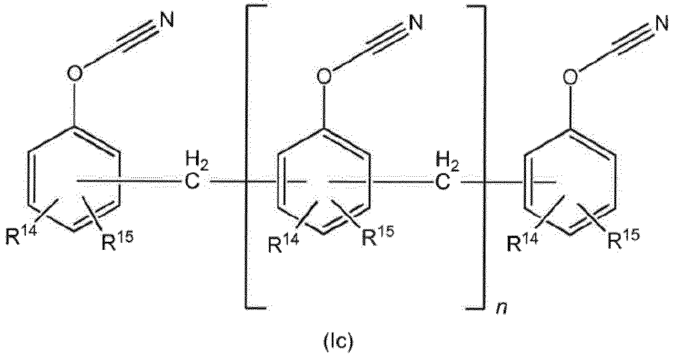 et les mélanges oligomères de ceux-ci, dans lesquels n est un nombre entier de 1 à 20 et R¹⁴ et R¹⁵ sont indépendamment choisis dans le groupe constitué par l'atome d'hydrogène et les groupes alkyle en C₁₋₁₀ linéaires et alkyle en C₄₋₁₀ ramifiés ;
(b) de 0 à 84,9 % en poids d'au moins une résine époxy difonctionnelle ou polyfonctionnelle choisie dans le groupe constitué par les résines époxy de formule 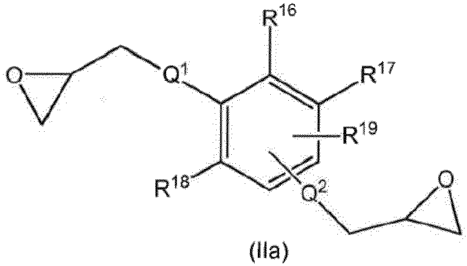 dans lesquelles Q¹ et Q² sont indépendamment l'atome d'oxygène ou -N(G)-, avec G = un groupe oxiranylméthyle, et R¹⁶ à R¹⁹ sont indépendamment choisis dans le groupe constitué par l'atome d'hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, cycloalkyle en C₃₋₈ halogénés, alcoxy en C₁₋₁₀, halogéno, phényle et phénoxy ;
les résines époxy de formule 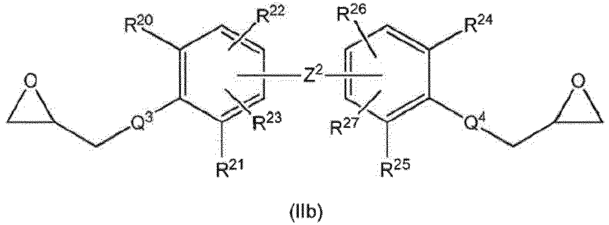 dans lesquelles Q³ et Q⁴ sont indépendamment l'atome d'oxygène ou -N(G)-, avec G = un groupe oxiranylméthyle, R²⁰ à R²⁷ sont indépendamment choisis dans le groupe constitué par l'atome d'hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, cycloalkyle en C₃₋₈ halogénés, alcoxy en C₁₋₁₀, halogéno, phényle et phénoxy et Z² désigne une liaison directe ou une fraction divalente choisie dans le groupe constitué par les fractions -O-, -S-, -S(=O)-, -S(=O)₂-, -CH(CF₃)-, -C(CF₃)₂-, -C(=O)-, -C(=CH₂)-, -C(=CCl₂)-, -Si(CH₃)₂-, alcanediyle en C₁₋₁₀ linéaires, alcanediyle en C₄₋₁₀ ramifiées, cycloalcanediyle en C₃₋₈, 1,2-phénylène, 1,3-phénylène, 1,4-phénylène, glycidyloxyphénylméthylène et -N(R²⁸)-, R²⁸ étant choisi dans le groupe constitué par l'atome d'hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, phényle et phénoxy ;
les résines époxy de formule 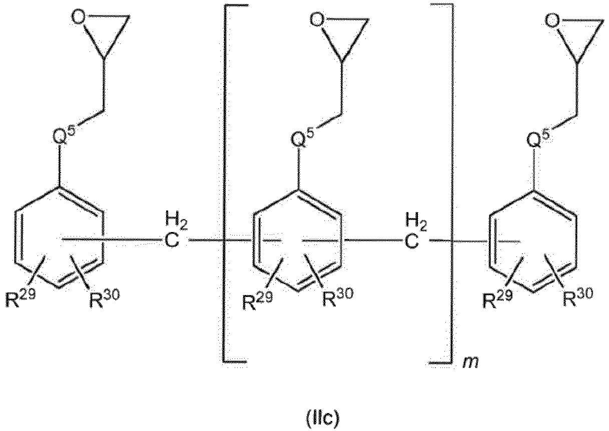 et les mélanges oligomères de celles-ci, dans lesquelles *m* est un nombre entier de 1 à 20, Q⁵ est l'atome d'oxygène ou -N(G)-, avec G = un groupe oxiranylméthyle, et R²⁹ et R³⁰ sont indépendamment choisis dans le groupe constitué par l'atome d'hydrogène et les groupes alkyle en C₁₋₁₀ linéaires et alkyle en C₄₋₁₀ ramifiés ; et les éthers de diglycidyle de naphtalènediol ;
et
(c) de 0,1 à 25 % en poids d'un catalyseur exempt de métal ;
le catalyseur exempt de métal étant choisi dans le groupe constitué par les diamines aromatiques de formule 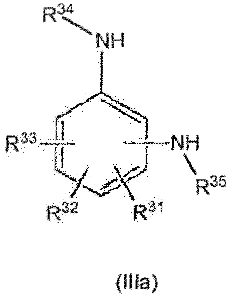 ou 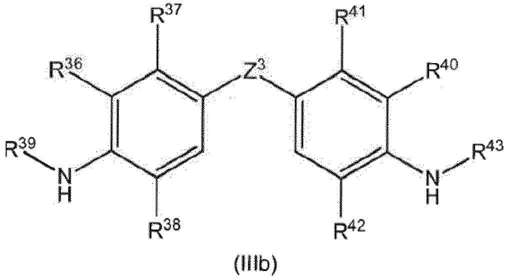 dans lesquelles R³¹, R³², R³³, R³⁶, R³⁷, R³⁸, R⁴⁰, R⁴¹ et R⁴² sont indépendamment choisis entre l'atome d'hydrogène et un groupe alkyle en C₁₋₄, alcoxy en C₁₋₄, alkylthio en C₁₋₄ et chloro ; R³⁴, R³⁵, R³⁹ et R⁴³ sont indépendamment choisis entre l'atome d'hydrogène et un groupe alkyle en C₁₋₈, et les mélanges de ceux-ci ; et Z³ désigne une liaison directe ou une fraction divalente choisie dans le groupe constitué par les fractions -O-, -S-, -S(=O)-, -S(=O)₂-, -CH(CF₃)-, -C(CF₃)₂-, -C(=O)-, -C(=CH₂)-, -C (=CCl₂)-, -Si(CH₃)₂-, alcanediyle en C₁₋₁₀ linéaires, alcanediyle en C₄₋₁₀ ramifiées, cycloalcanediyle en C₃₋₈, 1,2-phénylène, 1,3-phénylène, 1,4-phénylène et -N(R⁴⁴)-, R⁴⁴ étant choisi dans le groupe constitué par l'atome d'hydrogène et les groupes alkyle en C₁₋₁₀ linéaires, alkyle en C₁₋₁₀ linéaires halogénés, alkyle en C₄₋₁₀ ramifiés, alkyle en C₄₋₁₀ ramifiés halogénés, cycloalkyle en C₃₋₈, phényle et phénoxy ;
les pourcentages de (a), (b) et (c) étant par rapport à la quantité totale de (a), (b) et (c) ;
(ii) fournir une structure fibreuse
(iii)placer ladite structure fibreuse dans un moule ou sur un substrat,
(iv) imprégner ladite structure fibreuse dudit mélange liquide, éventuellement par application d'une pression élevée et/ou évacuation de l'air du moule et de la structure fibreuse, à une température de 20 à 80 °C, et
(v) faire durcir ledit mélange liquide par application d'une température de 30 à 300 °C, de préférence de 30 à 220 °C, pendant une durée suffisante pour faire durcir ledit mélange.

2. Procédé selon la revendication 1, dans lequel l'imprégnation dans l'étape (iii) est réalisée à l'aide d'un procédé choisi dans le groupe constitué par le moulage par transfert de résine, le moulage par transfert de résine assisté par le vide, l'infusion de résine liquide, le procédé SCRIMP (Seemann Composites Resin Infusion Molding Process), l'infusion de résine assistée par le vide, le moulage par injection, le moulage par compression, le moulage par projection, l'extrusion par tirage, la stratification et l'enroulement filamentaire.

3. Procédé selon la revendication 1 ou 2, dans lequel le catalyseur (c) est choisi dans le groupe constitué par la 3,5-diéthyltoluène-2,4-diamine, la 3,5-diéthyltoluène-2,6-diamine, la 3,5-bis(méthylthio)toluène-2,4-diamine, la 3,5-bis(méthylthio)toluène-2,6-diamine, la 4,4'-méthylènebis(2,6-diisopropylaniline), la 4,4'-méthylènebis(2-isopropyl-6-méthylaniline), la 4,4'-méthylènebis(2,6-diéthylaniline), la 4,4'-méthylènebis(3-chloro-2,6-diéthylaniline), la 4,4'-méthylènebis(2-éthyl-6-méthylaniline), la 4,4'-méthylènebis(*N-sec*-butylaniline) et les mélanges de celles-ci.

4. Procédé selon l'une quelconque des revendications 1 à 3, dans lequel l'au moins un ester cyanate difonctionnel ou polyfonctionnel (a) est un ester cyanate de formule (Ic) dans lequel R¹⁴ et R¹⁵ sont des atomes d'hydrogène et la valeur moyenne de n va de 1 à 20, de préférence de 1 à 5.

5. Procédé selon l'une quelconque des revendications 1 à 4, dans lequel l'au moins une résine époxy difonctionnelle ou polyfonctionnelle (b) est choisie dans le groupe constitué par les résines d'éther de diglycidyle de bisphénol A, les résines d'éther de diglycidyle de bisphénol F, le *N,N,O*-triglycidyl-3-aminophénol, le *N,N,O*-triglycidyl-4-aminophénol, la *N,N,N',N*'-tétraglycidyl-4,4'-méthylènebisbenzèneamine, les résines d'éther de triglycidyle de 4,4',4"-méthylidènetrisphénol, les éthers de diglycidyle de naphtalènediol et les mélanges de ceux-ci.

6. Procédé selon l'une quelconque des revendications 1 à 5, dans lequel le mélange liquide obtenu dans l'étape (i) comprend de 20 à 80 % en poids de l'au moins un ester cyanate difonctionnel ou polyfonctionnel (a).

7. Procédé selon l'une quelconque des revendications 1 à 6, dans lequel le mélange liquide obtenu dans l'étape (i) comprend de 20 à 79 % en poids de l'au moins une résine époxy difonctionnelle ou polyfonctionnelle (b).

8. Procédé selon l'une quelconque des revendications 1 à 7, dans lequel le mélange liquide obtenu dans l'étape (i) comprend de 0,1 à 10 % en poids du catalyseur (c).

9. Procédé selon l'une quelconque des revendications 1 à 8, dans lequel le mélange liquide obtenu dans l'étape (i) comprend moins de 20 % en poids, par rapport au poids total du mélange liquide, d'un solvant.

10. Procédé selon la revendication 9, dans lequel le mélange liquide obtenu dans l'étape (i) comprend moins de 10 % en poids, par rapport au poids total du mélange liquide, d'un solvant.

11. Procédé selon la revendication 10, dans lequel le mélange liquide obtenu dans l'étape (i) est exempt de solvant.

12. Procédé selon l'une quelconque des revendications 1 à 11, dans lequel la structure fibreuse fournie dans l'étape (ii) est choisie dans le groupe constitué par les fibres de carbone, les fibres de verre, les fibres de quartz, les fibres de bore, les fibres de céramique, des fibres d'aramide, les fibres de polyester, les fibres de polyéthylène, les fibres naturelles et les mélanges de celles-ci.

13. Procédé selon l'une quelconque des revendications 1 à 12, dans lequel la structure fibreuse fournie dans l'étape (ii) est choisie dans le groupe constitué par les fils de base, les fils, les stratifils, les étoffes unidirectionnelles, les étoffes à 0/90°, les tissus, les étoffes hybrides, les étoffes multiaxiales, les mats à fils coupés, les papiers de soie, les tresses et les associations de ceux-ci.

14. Procédé selon l'une quelconque des revendications 1 à 13, dans lequel le mélange liquide obtenu dans l'étape (i) comprend un ou plusieurs constituants supplémentaires choisis dans le groupe constitué par les agents de démoulage, les charges, les diluants réactifs et les associations de ceux-ci.

15. Pièce renforcée par des fibres pouvant être obtenue par le procédé selon l'une quelconque des revendications 1 à 14.

16. Pièce renforcée par des fibres selon la revendication 15, qui est choisie dans le groupe constitué par les panneaux renforcés par des fibres, les géométries complexes, les pièces comprenant des parties à symétrie de rotation, les profilés massifs et creux et les pièces à structure en sandwich.
